# EUROPEAN PATENT APPLICATION

(11) **EP 3 737 191 A1**
(43) Date of publication of application: **11.11.2020**
(21) Application number: 19750517.5
(22) Date of filing: 17.01.2019
(51) Int. Cl.: H04W 74/02

(54) **METHOD, APPARATUS AND SYSTEM FOR SENDING AND RECEIVING UPLINK DATA**

(30) Priority: 12.02.2018 CN 201810146743
(71) Applicant: HUAWEI TECHNOLOGIES CO., LTD., Shenzhen, Guangdong 518129, (CN)
(72) Inventor: DU, Bai, Shenzhen, Guangdong 518129 (CN); ZHANG, Peng, Shenzhen, Guangdong 518129 (CN); LIU, Zhe, Shenzhen, Guangdong 518129 (CN); ZHOU, Guohua, Shenzhen, Guangdong 518129 (CN)
(74) Representative: Pfenning, Meinig & Partner mbB
(86) International application number: PCT/CN2019/072238
(87) International publication number: WO 2019/154039

(57) **Abstract**

This application relates to the field of communications technologies, and in particular, to uplink data sending and receiving methods, an apparatus, and a system. A sending method includes: receiving, by a terminal device, control information sent by a network device, where the control information is used to indicate the terminal device to send first data on a first resource; and when the first resource and a second resource to be used by the terminal device to send second data overlap in a first time domain range in time domain, stopping sending, by the terminal device on the first resource, the first data in the first time domain range, where a frequency domain range corresponding to the first resource belongs to a first carrier, and a frequency domain range corresponding to the second resource belongs to a second carrier. According to the foregoing technical solution, uplink data sending of the terminal device that does not support simultaneous data sending on resources of different carriers is effectively supported, and this helps avoid a conflict in the uplink data sending.

## Description

This application claims priority to Chinese Patent Application No. 201810146743.8, filed with the Chinese Patent Office on February 12, 2018 and entitled "UPLINK DATA SENDING AND RECEIVING METHOD, APPARATUS, AND SYSTEM", which is incorporated herein by reference in its entirety.

### TECHNICAL FIELD

This application relates to the field of communications technologies, and in particular, to uplink data sending and receiving methods, an apparatus, and a system.

### BACKGROUND

In 5th generation (5th generation, 5G) mobile communications new radio (new radio, NR), a frequency band below 6 gigahertz (gigahertz, GHz) (a sub6G frequency band for short) to a 60 GHz frequency band are supported. When a terminal device in NR sends uplink data on a high frequency carrier in the sub6G frequency band to the 60 GHz frequency band, because a path loss on the high frequency carrier is relatively large, coverage is limited. However, due to limitations of costs, power consumption, and the like of the terminal device, the uplink coverage cannot be improved by increasing transmit power of the uplink data or the like. Consequently, usually, when the terminal device sends the uplink data by using the high frequency carrier, if the terminal device is an edge terminal device and is relatively far from a base station, the base station may not receive the uplink data sent by the terminal device.

In long term evolution (long term evolution, LTE), a frequency band below 3 GHz (a sub3GHz frequency band for short) is supported. When resource utilization on a carrier in the frequency band supported in LTE is relatively low, uplink data sending in NR may share a carrier in the sub3GHz frequency band with uplink data sending in LTE. In NR, when the uplink data is sent by using the carrier in the sub3GHz frequency band, because the carrier in the sub3GHz frequency band is a low frequency carrier, and a path loss is relatively small, the uplink coverage is improved. In the NR, the frequency band supported by the LTE is shared, so that the carrier in the sub3GHz frequency band may also be referred to as a supplementary uplink frequency (supplementary uplink frequency, SUL) carrier, and a carrier in another frequency band may be referred to as a non-SUL carrier.

How the terminal device performs data transmission by using an appropriate communication resource is a problem that needs to be resolved.

### SUMMARY

Embodiments of this application provide uplink data sending and receiving methods, an apparatus, and a system, to help improve a possibility of successfully sending uplink data.

According to a first aspect, an embodiment of this application provides an uplink data sending method. The method includes:
receiving, by a terminal device, control information sent by a network device, where the control information is used to indicate the terminal device to send first data on a first resource; and when the first resource and a second resource to be used by the terminal device to send second data overlap in a first time domain range in time domain, stopping sending, by the terminal device on the first resource, the first data in the first time domain range, where a frequency domain range corresponding to the first resource belongs to a first carrier, and a frequency domain range corresponding to the second resource belongs to a second carrier.

In this embodiment of this application, when the first resource and the second resource overlap in the first time domain range in time domain, the terminal device stops sending, on the first resource, the first data in the first time domain range, so that uplink data sending of the terminal device that does not support simultaneous data sending on resources of different carriers is effectively supported, and this helps avoid a conflict in the uplink data sending and reduces a possibility of failing to send uplink data.

In a possible design, a frequency of the first carrier is higher than a frequency of the second carrier. The foregoing technical solution helps further improve a possibility of successfully sending the uplink data.

In a possible design, the terminal device sends, on the second resource, the second data in the first time domain range. The foregoing technical solution helps improve a possibility of successfully sending the second data.

In a possible design, the terminal device stops sending, on the first resource, the first data in a second time domain range before the first time domain range and/or a third time domain range after the first time domain range. An end moment of the second time domain range overlaps a start moment of the first time domain range, and an end moment of the first time domain range overlaps a start moment of the third time domain range. The foregoing technical solution helps further improve the possibility of successfully sending the second data.

In a possible design, a length of the second time domain range and/or a length of the third time domain range are/is predefined; or a length of the second time domain range and/or a length of the third time domain range are/is indicated by the network device to the terminal device by using indication information.

In a possible design, the second carrier is a supplementary uplink frequency (supplementary uplink frequency, SUL) carrier, and the first carrier is a non-SUL carrier.

In a possible design, the second data is ultra-reliable and low-latency communications (ultra-reliable and low-latency communications, URLLC) service data.

According to a second aspect, an embodiment of this application provides an uplink data receiving method. The method includes:
sending, by a network device, control information to a terminal device, where the control information is used to indicate the terminal device to send first data on a first resource; and if receiving, on a second resource in a first time domain range, second data sent by the terminal device, determining, by the network device, that the terminal device stops sending, on the first resource, the first data in the first time domain range, where the second resource and the first resource overlap in the first time domain range in time domain, a frequency domain range corresponding to the first resource belongs to a first carrier, and a frequency domain range corresponding to the second resource belongs to a second carrier. The foregoing technical solution helps avoid a conflict in uplink data sending and reduces a possibility of failing to send uplink data.

In addition, it should be noted that after determining that the terminal device stops sending, on the first resource, the first data in the first time domain range, if the network device receives, on the first resource, third data in the first time domain range, the network device does not perform decoding and the like on the third data, or the network device discards the third data.

In a possible design, a frequency of the first carrier is higher than a frequency of the second carrier. The foregoing technical solution helps further improve a possibility of successfully sending uplink data.

In a possible design, the network device determines that the terminal device stops sending, on the first resource, the first data in a second time domain range before the first time domain range and/or a third time domain range after the first time domain range. An end moment of the second time domain range overlaps a start moment of the first time domain range, and an end moment of the first time domain range overlaps a start moment of the third time domain range. The foregoing technical solution helps further improve a possibility of successfully sending the second data.

In a possible design, a length of the second time domain range and/or a length of the third time domain range are/is predefined; or a length of the second time domain range and/or a length of the third time domain range are/is indicated by the network device to the terminal device by using indication information.

In a possible design, the first carrier is a non-SUL carrier, and the second carrier is an SUL carrier.

In a possible design, the second data is URLLC service data.

According to a third aspect, an embodiment of this application provides an uplink data sending method. The method includes:
determining, by a terminal device, a first resource to be used to send scheduling-free uplink data, where a frequency domain range corresponding to the first resource belongs to a first bandwidth part or a second bandwidth part, the first bandwidth part and the second bandwidth part are activated bandwidth parts configured by a network device for the terminal device, the first bandwidth part is an activated bandwidth part on a first carrier, and the second bandwidth part is an activated bandwidth part on a second carrier; and then sending, by the terminal device on the first resource, the scheduling-free uplink data to the network device.

In this embodiment of this application, when the first bandwidth part is the activated bandwidth part on the first carrier, and the second bandwidth part is the activated bandwidth part on the second carrier, the scheduling-free uplink data is sent to the network device on the first resource. This helps improve reliability of scheduling-free uplink data transmission.

In a possible design, a frequency of the second carrier is lower than a frequency of the first carrier, and the frequency domain range corresponding to the first resource belongs to the second bandwidth part. The foregoing technical solution helps further improve the reliability of the scheduling-free uplink data transmission.

In a possible design, a configured second resource to be used to send the scheduling-free uplink data is not activated on the first bandwidth part, or a second resource to be used to send the scheduling-free uplink data is not configured on the first bandwidth part. The foregoing technical solution helps simplify an implementation in which the frequency domain range corresponding to the first resource determined by the terminal device and used to send the scheduling-free uplink data belongs to the second bandwidth part.

In a possible design, in this embodiment of this application, another implementation in which the frequency domain range corresponding to the first resource determined by the terminal device and used to send the scheduling-free uplink data belongs to the second bandwidth part is: The terminal device receives configuration information sent by the network device, and the configuration information is used to indicate that the frequency domain range corresponding to the resource to be used by the terminal device to send the scheduling-free uplink data belongs to the second bandwidth part.

In a possible design, when a frequency domain resource to be used by the terminal device to send uplink data belongs to the first bandwidth part, if a first latency is less than or equal to a preset threshold, the frequency domain range corresponding to the first resource belongs to the second bandwidth part. The first latency includes a time of switching from the first bandwidth part to the second bandwidth part and a time of reaching the first resource. The foregoing technical solution helps reduce a latency of the scheduling-free uplink data transmission.

In a possible design, the first carrier is a non-SUL carrier, and the second carrier is an SUL carrier.

In a possible design, the scheduling-free uplink data is URLLC service data.

According to a fourth aspect, an embodiment of this application provides an uplink data receiving method. The method includes:
configuring, by a network device, a first bandwidth part and a second bandwidth part for a terminal device, where the first bandwidth part is an activated bandwidth part on a first carrier, and the second bandwidth part is an activated bandwidth part on a second carrier; and then receiving, by the network device on a first resource, scheduling-free uplink data sent by the terminal device, where a frequency domain range corresponding to the first resource belongs to the first bandwidth part or the second bandwidth part. The foregoing technical solution helps improve reliability of scheduling-free uplink data transmission.

In a possible design, a frequency of the second carrier is lower than a frequency of the first carrier, and the frequency domain range corresponding to the first resource belongs to the second bandwidth part. The foregoing technical solution helps further improve the reliability of the scheduling-free uplink data transmission.

In a possible design, a configured second resource to be used to send the scheduling-free uplink data is not activated on the first bandwidth part, or a second resource to be used to send the scheduling-free uplink data is not configured on the first bandwidth part. The foregoing technical solution helps simplify an implementation in which the frequency domain range corresponding to the first resource determined by the terminal device and used to send the scheduling-free uplink data belongs to the second bandwidth part.

In a possible design, in this embodiment of this application, another implementation in which the frequency domain range corresponding to the first resource determined by the terminal device and used to send the scheduling-free uplink data belongs to the second bandwidth part is: The network device sends configuration information to the terminal device, and the configuration information is used to indicate that the frequency domain range corresponding to the resource to be used by the terminal device to send the scheduling-free uplink data belongs to the second bandwidth part.

In a possible design, the first carrier is a non-SUL carrier, and the second carrier is an SUL carrier.

In a possible design, the scheduling-free uplink data is URLLC service data.

According to a fifth aspect, an embodiment of this application provides an initial access method. The method includes:
receiving, by a terminal device, a first system information block and a second system information block, where the first system information block indicates a location of a resource to be used for initial access on a first carrier, the second system information block is used to indicate a location of a resource to be used for initial access on a second carrier, and a frequency of the first carrier is higher than a frequency of the second carrier; and
performing, by the terminal device, the initial access on the second carrier when at least one of the following conditions is met:
   a service type of to-be-sent data in an initial access process is a preset type, a data volume of the to-be-sent data in the initial access process is less than a first threshold, and a signal receiving quality on the first carrier is less than a second threshold.

In this embodiment of this application, when the frequency of the first carrier is higher than the frequency of the second carrier, the initial access is performed on the second carrier when at least one of the following conditions is met: the service type of the to-be-sent data in the initial access process is the preset type, the data volume of the to-be-sent data in the initial access process is less than the first threshold, and the signal receiving quality on the first carrier is less than the second threshold, and this helps improve reliability of data transmission in the initial access process.

In a possible design, the first carrier is a non-SUL carrier, and the second carrier is an SUL carrier.

In a possible design, the preset type includes a type of URLLC service data.

According to a sixth aspect, an embodiment of this application provides an initial access method. The method includes:
sending, by a network device, a first system information block and a second system information block, where the first system information block indicates a location of a resource to be used for initial access on a first carrier, the second system information block is used to indicate a location of a resource to be used for initial access on a second carrier, and a frequency of the first carrier is higher than a frequency of the second carrier; and then when a terminal device meets at least one of the following conditions, receiving, by the network device on the second carrier, data to be sent by the terminal device in an initial access process, where the conditions are:
a service type of the data to be sent by the terminal device in the initial access process is a preset type, a data volume of the data to be sent by the terminal device in the initial access process is less than a first threshold, and a signal receiving quality of the terminal device on the first carrier is less than a second threshold. The foregoing technical solution helps improve reliability of data transmission in the initial access process.

In a possible design, the first carrier is a non-SUL carrier, and the second carrier is an SUL carrier.

In a possible design, the preset type includes a type of URLLC service data.

According to a seventh aspect, an embodiment of this application provides an apparatus. The apparatus includes a transceiver module and a processing module. The transceiver module is configured to receive control information sent by a network device, where the control information is used to indicate the apparatus to send first data on a first resource. When the first resource and a second resource to be used by the transceiver module to send second data overlap in a first time domain range in time domain, the processing module is configured to trigger the transceiver module to stop sending, on the first resource, the first data in the first time domain range. A frequency domain range corresponding to the first resource belongs to a first carrier, and a frequency domain range corresponding to the second resource belongs to a second carrier.

In a possible design, a frequency of the first carrier is higher than a frequency of the second carrier.

In a possible design, the transceiver module is further configured to send, on the second resource, the second data in the first time domain range.

In a possible design, the processing module is further configured to trigger the transceiver module to stop sending, on the first resource, the first data in a second time domain range before the first time domain range and/or a third time domain range after the first time domain range. An end moment of the second time domain range overlaps a start moment of the first time domain range, and an end moment of the first time domain range overlaps a start moment of the third time domain range.

In a possible design, a length of the second time domain range and/or a length of the third time domain range are/is predefined; or the transceiver module is further configured to receive indication information sent by the network device, where the indication information is used to indicate a length of the second time domain range and/or a length of the third time domain range.

In a possible design, the second carrier is an SUL carrier, and the first carrier is a non-SUL carrier.

In a possible design, the second data is URLLC service data.

It should be noted that a hardware implementation corresponding to the transceiver module is a transceiver, and the transceiver includes a receiver and a transmitter. The receiver and the transmitter may be independent hardware units, or may be integrated into one hardware unit. This is not limited in this embodiment of this application. A hardware implementation corresponding to the processing module is a processor.

According to another aspect of the embodiments of this application, a chip is further provided. The chip is connected to a transceiver and a memory, and is configured to read and execute a program stored in the memory, to trigger the transceiver to implement the uplink data sending method according to any one of the first aspect and the possible designs of the first aspect.

According to still another aspect of the embodiments of this application, a computer storage medium is further provided. The computer storage medium stores a computer program; and when the computer program is executed by a processor, the processor is configured to implement the uplink data sending method according to any one of the first aspect and the possible designs of the first aspect.

According to an eighth aspect, an embodiment of this application provides an apparatus. The apparatus includes a transceiver module and a processing module. The transceiver module is configured to send control information to a terminal device, where the control information is used to indicate the terminal device to send first data on a first resource. The processing module is configured to: if the transceiver module receives, on a second resource in a first time domain range, second data sent by the terminal device, determine that the terminal device stops sending, on the first resource, the first data in the first time domain range. The second resource and the first resource overlap in the first time domain range in time domain, a frequency domain range corresponding to the first resource belongs to a first carrier, and a frequency domain range corresponding to the second resource belongs to a second carrier.

In a possible design, a frequency of the first carrier is higher than a frequency of the second carrier.

In a possible design, the processing module is further configured to determine that the terminal device stops sending, on the first resource, the first data in a second time domain range before the first time domain range and/or a third time domain range after the first time domain range. An end moment of the second time domain range overlaps a start moment of the first time domain range, and an end moment of the first time domain range overlaps a start moment of the third time domain range.

In a possible design, a length of the second time domain range and/or a length of the third time domain range are/is predefined; or the transceiver module is further configured to send indication information to the terminal device, where the indication information is used to indicate a length of the second time domain range and/or a length of the third time domain range.

In a possible design, the first carrier is a non-SUL carrier, and the second carrier is an SUL carrier.

In a possible design, the second data is URLLC service data.

It should be noted that a hardware implementation corresponding to the transceiver module is a transceiver, and the transceiver includes a receiver and a transmitter. The receiver and the transmitter may be independent hardware units, or may be integrated into one hardware unit. This is not limited in this embodiment of this application. A hardware implementation corresponding to the processing module is a processor.

According to another aspect of the embodiments of this application, a chip is further provided. The chip is connected to a transceiver and a memory, and is configured to read and execute a program stored in the memory, to trigger the transceiver to implement the uplink data receiving method according to any one of the second aspect and the possible designs of the second aspect.

According to still another aspect of the embodiments of this application, a computer storage medium is further provided. The computer storage medium stores a computer program; and when the computer program is executed by a processor, the processor is configured to implement the uplink data receiving method according to any one of the second aspect and the possible designs of the second aspect.

According to a ninth aspect, an embodiment of this application provides an apparatus. The apparatus includes a transceiver module and a processing module. The processing module is configured to determine a first resource to be used to send scheduling-free uplink data, where a frequency domain range corresponding to the first resource belongs to a first bandwidth part or a second bandwidth part, the first bandwidth part and the second bandwidth part are activated bandwidth parts configured by a network device for the apparatus, the first bandwidth part is an activated bandwidth part on a first carrier, and the second bandwidth part is an activated bandwidth part on a second carrier. The transceiver module is configured to send, on the first resource, the scheduling-free uplink data to the network device.

In a possible design, a frequency of the second carrier is lower than a frequency of the first carrier, and the frequency domain range corresponding to the first resource belongs to the second bandwidth part.

In a possible design, a configured second resource to be used to send the scheduling-free uplink data is not activated on the first bandwidth part, or a second resource to be used to send the scheduling-free uplink data is not configured on the first bandwidth part.

In a possible design, the transceiver module is further configured to receive configuration information sent by the network device, and the configuration information is used to indicate that the frequency domain range corresponding to the resource to be used by the transceiver module to send the scheduling-free uplink data belongs to the second bandwidth part.

In a possible design, when a frequency domain resource to be used by the transceiver module to send uplink data belongs to the first bandwidth part, if a first latency is less than or equal to a preset threshold, the frequency domain range corresponding to the first resource belongs to the second bandwidth part. The first latency includes a time of switching from the first bandwidth part to the second bandwidth part and a time of reaching the first resource.

In a possible design, the first carrier is a non-SUL carrier, and the second carrier is an SUL carrier.

In a possible design, the scheduling-free uplink data is URLLC service data.

It should be noted that a hardware implementation corresponding to the transceiver module is a transceiver, and the transceiver includes a receiver and a transmitter. The receiver and the transmitter may be independent hardware units, or may be integrated into one hardware unit. This is not limited in this embodiment of this application. A hardware implementation corresponding to the processing module is a processor.

According to another aspect of the embodiments of this application, a chip is further provided. The chip is connected to a transceiver and a memory, and is configured to read and execute a program stored in the memory, to trigger the transceiver to implement the uplink data sending method according to any one of the third aspect and the possible designs of the third aspect.

According to still another aspect of the embodiments of this application, a computer storage medium is further provided. The computer storage medium stores a computer program; and when the computer program is executed by a processor, the processor is configured to implement the uplink data sending method according to any one of the third aspect and the possible designs of the third aspect.

According to a tenth aspect, an embodiment of this application provides an apparatus. The apparatus includes a transceiver module and a processing module. The processing module is configured to configure a first bandwidth part and a second bandwidth part for a terminal device, where the first bandwidth part is an activated bandwidth part on a first carrier, and the second bandwidth part is an activated bandwidth part on a second carrier. The transceiver module is configured to receive, on a first resource, scheduling-free uplink data sent by the terminal device, where a frequency domain range corresponding to the first resource belongs to the first bandwidth part or the second bandwidth part.

In a possible design, a frequency of the second carrier is lower than a frequency of the first carrier, and the frequency domain range corresponding to the first resource belongs to the second bandwidth part.

In a possible design, a configured second resource to be used to send the scheduling-free uplink data is not activated on the first bandwidth part, or a second resource to be used to send the scheduling-free uplink data is not configured on the first bandwidth part.

In a possible design, the transceiver module is further configured to send configuration information to the terminal device, and the configuration information is used to indicate that the frequency domain range corresponding to the resource to be used by the terminal device to send the scheduling-free uplink data belongs to the second bandwidth part.

In a possible design, the first carrier is a non-SUL carrier, and the second carrier is an SUL carrier.

In a possible design, the scheduling-free uplink data is URLLC service data.

It should be noted that a hardware implementation corresponding to the transceiver module is a transceiver, and the transceiver includes a receiver and a transmitter. The receiver and the transmitter may be independent hardware units, or may be integrated into one hardware unit. This is not limited in this embodiment of this application. A hardware implementation corresponding to the processing module is a processor.

According to another aspect of the embodiments of this application, a chip is further provided. The chip is connected to a transceiver and a memory, and is configured to read and execute a program stored in the memory, to trigger the transceiver to implement the uplink data receiving method according to any one of the fourth aspect and the possible designs of the fourth aspect.

According to still another aspect of the embodiments of this application, a computer storage medium is further provided. The computer storage medium stores a computer program; and when the computer program is executed by a processor, the processor is configured to implement the uplink data receiving method according to any one of the fourth aspect and the possible designs of the fourth aspect.

According to an eleventh aspect, an embodiment of this application provides an apparatus. The apparatus includes a transceiver module and a processing module. The transceiver module is configured to receive a first system information block and a second system information block, where the first system information block indicates a location of a resource to be used for initial access on a first carrier, the second system information block is used to indicate a location of a resource to be used for initial access on a second carrier, and a frequency of the first carrier is higher than a frequency of the second carrier. The processing module is configured to perform the initial access on the second carrier when at least one of the following conditions is met:
a service type of to-be-sent data in an initial access process is a preset type, a data volume of the to-be-sent data in the initial access process is less than a first threshold, and a signal receiving quality on the first carrier is less than a second threshold.

In a possible design, the first carrier is a non-SUL carrier, and the second carrier is an SUL carrier.

In a possible design, the preset type includes a type of URLLC service data.

It should be noted that a hardware implementation corresponding to the transceiver module is a transceiver, and the transceiver includes a receiver and a transmitter. The receiver and the transmitter may be independent hardware units, or may be integrated into one hardware unit. This is not limited in this embodiment of this application. A hardware implementation corresponding to the processing module is a processor.

According to another aspect of the embodiments of this application, a chip is further provided. The chip is connected to a transceiver and a memory, and is configured to read and execute a program stored in the memory, to trigger the transceiver to implement the initial access method according to any one of the fifth aspect and the possible designs of the fifth aspect.

According to still another aspect of the embodiments of this application, a computer storage medium is further provided. The computer storage medium stores a computer program, and when the computer program is executed by a processor, the processor is configured to implement the initial access method according to any one of the fifth aspect and the possible designs of the fifth aspect.

According to a twelfth aspect, an embodiment of this application provides an apparatus. The apparatus includes a receiving module and a sending module. The sending module is configured to send a first system information block and a second system information block, where the first system information block indicates a location of a resource to be used for initial access on a first carrier, the second system information block is used to indicate a location of a resource to be used for initial access on a second carrier, and a frequency of the first carrier is higher than a frequency of the second carrier. The receiving module is configured to: when a terminal device meets at least one of the following conditions, receive, on the second carrier, data to be sent by the terminal device in an initial access process, where the conditions are:
a service type of the data to be sent by the terminal device in the initial access process is a preset type, a data volume of the data to be sent by the terminal device in the initial access process is less than a first threshold, and a signal receiving quality of the terminal device on the first carrier is less than a second threshold.

In a possible design, the first carrier is a non-SUL carrier, and the second carrier is an SUL carrier.

In a possible design, the preset type includes a type of URLLC service data.

It should be noted that a hardware implementation corresponding to the receiving module is a receiver, and a hardware implementation corresponding to the sending module is a transmitter. A function of the receiver and a function of the transmitter may be integrated into one hardware module, in which case the receiver and the transmitter are jointly referred to as a transceiver. Alternatively, the receiver and the transceiver may be independent hardware units.

According to another aspect of the embodiments of this application, a chip is further provided. The chip is connected to a transceiver and a memory, and is configured to read and execute a program stored in the memory, to trigger the transceiver to implement the initial access method according to any one of the sixth aspect and the possible designs of the sixth aspect.

According to still another aspect of the embodiments of this application, a computer storage medium is further provided. The computer storage medium stores a computer program; and when the computer program is executed by a processor, the processor is configured to implement the initial access method according to any one of the sixth aspect and the possible designs of the sixth aspect.

An embodiment of this application further provides a communications system. The communications system includes the apparatus according to any one of the seventh aspect and the possible designs of the seventh aspect and the apparatus according to any one of the eighth aspect and the possible designs of the eighth aspect.

An embodiment of this application further provides a communications system. The communications system includes the apparatus according to any one of the ninth aspect and the possible designs of the ninth aspect and the apparatus according to any one of the tenth aspect and the possible designs of the tenth aspect.

An embodiment of this application further provides a communications system. The communications system includes the apparatus according to any one of the eleventh aspect and the possible designs of the eleventh aspect and the apparatus according to any one of the twelfth aspect and the possible designs of the twelfth aspect.

In addition, for technical effects of any possible design in the fourth aspect to the twelfth aspect, refer to the technical effects of different designs in the method corresponding to the terminal device side. Details are not described herein again.

### BRIEF DESCRIPTION OF DRAWINGS

FIG. 1 is a schematic architectural diagram of a possible mobile communications system to which an embodiment of this application is applicable;
FIG. 2 is a schematic flowchart of an uplink data sending method according to an embodiment of this application;
FIG. 3a to FIG. 3c each are schematic diagrams of a first time domain range according to an embodiment of this application;
FIG. 4 is a schematic diagram of a first resource and a second resource according to an embodiment of this application;
FIG. 5a to FIG. 5c each are schematic diagrams of a first resource and a second resource according to an embodiment of this application;
FIG. 6 is a schematic diagram of a first resource and a second resource according to an embodiment of this application;
FIG. 7 is a schematic flowchart of another uplink data sending method according to an embodiment of this application;
FIG. 8 is a schematic diagram of a GF resource on a non-SUL carrier and a GF resource on an SUL carrier according to an embodiment of this application;
FIG. 9 is a schematic diagram of a GF resource on a non-SUL carrier and a GF resource on an SUL carrier according to an embodiment of this application;
FIG. 10 is a schematic diagram of a GF resource on a non-SUL carrier and a GF resource on an SUL carrier according to an embodiment of this application;
FIG. 11 is a schematic flowchart of an initial access method according to an embodiment of this application;
FIG. 12 is a schematic structural diagram of an apparatus according to an embodiment of this application;
FIG. 13 is a schematic structural diagram of an apparatus according to an embodiment of this application;
FIG. 14 is a schematic structural diagram of an apparatus according to an embodiment of this application;
FIG. 15 is a schematic structural diagram of an apparatus according to an embodiment of this application;
FIG. 16 is a schematic structural diagram of an apparatus according to an embodiment of this application;
FIG. 17 is a schematic structural diagram of an apparatus according to an embodiment of this application;
FIG. 18 is a schematic structural diagram of an apparatus according to an embodiment of this application;
FIG. 19 is a schematic structural diagram of an apparatus according to an embodiment of this application;
FIG. 20 is a schematic structural diagram of an apparatus according to an embodiment of this application;
FIG. 21 is a schematic structural diagram of an apparatus according to an embodiment of this application;
FIG. 22 is a schematic structural diagram of an apparatus according to an embodiment of this application;
FIG. 23 is a schematic structural diagram of an apparatus according to an embodiment of this application;
FIG. 24 is a schematic structural diagram of a communications system according to an embodiment of this application;
FIG. 25 is a schematic structural diagram of a communications system according to an embodiment of this application; and
FIG. 26 is a schematic structural diagram of a communications system according to an embodiment of this application.

### DESCRIPTION OF EMBODIMENTS

The following describes embodiments of this application in detail with reference to accompanying drawings of this specification.

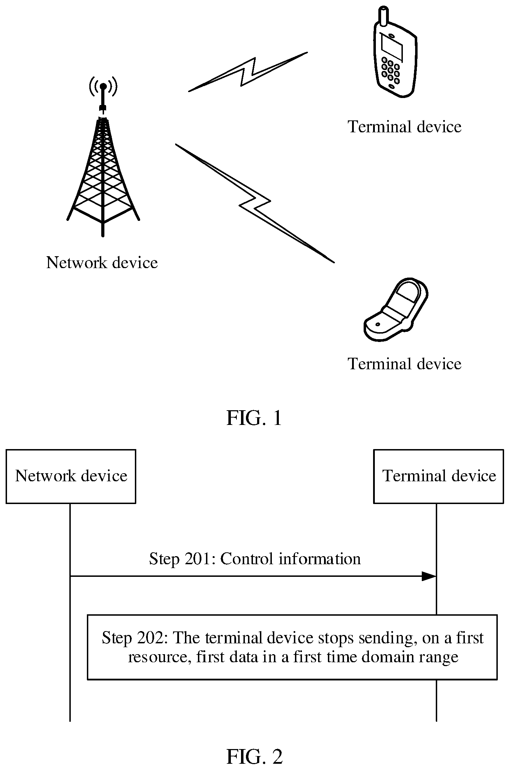

FIG. 1 is a schematic architectural diagram of a possible mobile communications system to which an embodiment of this application is applicable. The mobile communications system shown in FIG. 1 includes a network device and a terminal device. It should be understood that FIG. 1 is merely a schematic architectural diagram of the mobile communications system. A quantity of network devices and a quantity of terminal devices in the mobile communications system are not limited in this embodiment of this application. In addition to the network device and the terminal device, the mobile communications system to which this embodiment of this application is applicable may include another device such as a core network device, a wireless relay device, and a wireless backhaul device. This is not limited in this embodiment of this application either. In addition, the network device in this embodiment of this application may integrate all functions into one independent physical device, or may distribute the functions on a plurality of independent physical devices. This is not limited in this embodiment of this application either. In addition, the terminal device in this embodiment of this application may be connected to the network device in a wireless manner. It should be further noted that the terminal device in this embodiment of this application may be at a fixed position, or may be mobile.

The network device in this embodiment of this application is configured to enable the terminal device to access the mobile communications system. Specifically, the network device may be a base station (NodeB), an evolved NodeB (evolved NodeB, eNB), a base station in 5G, a base station in a future mobile communications system, an access point in a wireless fidelity (wireless fidelity, Wi-Fi) system, or the like. A specific technology and a specific device form that are used by the network device are not limited.

The terminal device in this embodiment of this application may also be referred to as a terminal (terminal), user equipment (user equipment, UE), a mobile station (mobile station, MS), a mobile terminal (mobile terminal, MT), or the like. Specifically, the terminal device may be a mobile phone (mobile phone), a tablet computer (pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. This is not limited.

It should be understood that the network device and the terminal device in this embodiment of this application may be deployed on land, where the deployment includes indoor or outdoor, or handheld or vehicle-mounted deployment, may be deployed on water, or may be deployed in air on an aerocraft, a balloon, a satellite, or the like. An application scenario of the network device and the terminal device is not limited.

It should be understood that in this embodiment of this application, communication between the network device and the terminal device and communication between terminal devices may be performed by using a licensed spectrum (licensed spectrum), an unlicensed spectrum (unlicensed spectrum), or both a licensed spectrum and an unlicensed spectrum. This is not limited. Communication between a radio access network device and the terminal device and communication between terminal devices may be performed by using a spectrum below 6 gigahertz (gigahertz, GHz), a spectrum above 6 GHz, or both a spectrum below 6 GHz and a spectrum above 6 GHz. A spectrum resource used between the network device and the terminal device is not limited in this embodiment of this application.

First, some terms in the embodiments of this application are described, to help a person skilled in the art understand technical solutions of the embodiments of this application.
1. Carrier: In the embodiments of this application, a carrier may also be referred to as a frequency band, a frequency band, a frequency domain range, or the like, and is a frequency domain resource with specific bandwidth. For example, the carrier may be an SUL carrier, or may be a non-SUL carrier. The SUL carrier may also be referred to as an SUL frequency band or an SUL frequency band, and may be a low-frequency frequency domain resource, for example, a sub3GHz frequency band. For example, uplink coverage may be improved by using the SUL carrier. The non-SUL carrier may also be referred to as a non-SUL carrier, a non-SUL frequency band, a non-SUL frequency band, a non-SUL frequency band, or the like, and may be a frequency domain resource whose frequency is higher than that of the SUL carrier, for example, a C-band (C-band). The non-SUL carrier may also be referred to as a UL frequency band. In the embodiments of this application, a first carrier may be a non-SUL carrier and a second carrier may be an SUL carrier. The SUL carrier and the non-SUL carrier may belong to a same cell (cell).
2. Data: Data in the embodiments of this application may be common data, enhanced mobile broadband (enhanced mobile broadband, eMBB) service data, massive machine-type communications (massive machine-type communications, mMTC) service data, ultra-reliable and low-latency communications (ultra-reliable and low-latency communications, URLLC) service data, or the like. An eMBB service is mainly characterized by a large data transmission volume and a high transmission rate. Typical eMBB services include an ultra-high definition video, augmented reality (augmented reality, AR), virtual reality (virtual reality, VR), and the like. An mMTC service is mainly characterized by a huge quantity of web-connected devices, a relatively small data transmission volume, and insensitivity of data to transmission latency. Typical mMTC services include smart grid power distribution automation, a smart city, and the like. A URLLC service is mainly characterized by ultra-high reliability, a low latency, a relatively small data transmission volume, and burstiness. Typical URLLC services include tactile interaction application services such as wireless control in an industrial manufacturing or production process, motion control and remote repair of an unmanned vehicle and an unmanned plane, and remote medical surgery. For example, first data in the embodiments of this application may be data, of a service type, that does not have a high latency requirement, such as eMBB service data or mMTC service data; and second data in the embodiments of this application may be uplink data scheduled by a network device or scheduling-free uplink data, for example, eMBB service data, mMTC service data, and URLLC service data. This is not limited.
3. Scheduling-free transmission: A scheduling-free transmission mechanism in the embodiments of this application is: A network device semi-statically configures, for a terminal device, a resource to be used to send scheduling-free uplink data, and when the terminal device needs to send the scheduling-free uplink data to the network device, the terminal device can send the scheduling-free uplink data on the resource that is configured by the network device for the terminal device and that is used to send the scheduling-free uplink data. When sending the scheduling-free uplink data, the terminal device does not need an uplink grant of the network device. Therefore, a manner of sending the scheduling-free uplink data may also be referred to as grant-free uplink sending or configured grant uplink sending. In addition, in a process in which the network device semi-statically configures, for the terminal device, the resource to be used by the terminal device to send the scheduling-free uplink data, the network device does not need to send an uplink grant (uplink grant, UL grant) to the terminal device. Therefore, the resource to be used to send the scheduling-free uplink data may also be referred to as a GF (grant-free) resource. For example, the network device may semi-statically configure the GF resource for the terminal device by using higher layer signaling (for example, radio resource control (radio resource control, RRC) signaling) and/or physical layer signaling (for example, downlink control information (downlink control information, DCI)). However, in the embodiments of this application, the scheduling-free uplink data is usually data, of a service type, that has a relatively high latency requirement, for example, URLLC service data.
4. Bandwidth part: A bandwidth part in the embodiments of this application may also be referred to as a BWP (bandwidth part), a carrier bandwidth part, a frequency resource part, a part of frequency resources, or another name. The BWP may be a part of or all frequency domain resources on a carrier, may be contiguous frequency domain resources, or may be non-contiguous frequency domain resources. For example, the BWP may include a plurality of contiguous subcarriers; for another example, the BWP may include a plurality of contiguous resource blocks (physical resource block, PRB); and so on. The contiguous frequency domain resource helps reduce complexity of resource allocation. The terminal device may support a plurality of BWPs, in other words, the network device may configure a plurality of BWPs for the terminal device. When the network device configures a plurality of BWPs for the terminal device, the plurality of BWPs may overlap, or may not overlap. In addition, frequency domain resources included in different BWPs may have a same subcarrier spacing, or may have different subcarrier spacings. The subcarrier spacing is a frequency domain length of a resource element (resource element, RE), and a value of the subcarrier spacing may include 15 kHz, 30 kHz, 60 kHz, or the like.
5. In the embodiments of this application, the terminal device can send scheduling-free uplink data only by using activated GF resources in a plurality of BWPs configured by the network device for the terminal device. During specific implementation, in one case, after configuring a GF resource for the terminal device, the network device may further activate or deactivate the GF resource. In this case, the network device may configure a plurality of BWPs for the terminal device, configure a GF resource on each BWP, and indicate, to the terminal device, GF resources that are activated on specific BWPs; and the terminal device selects, from the activated GF resources, a resource for sending the scheduling-free uplink data. Alternatively, in another case, the network device configures a GF resource for the terminal device, and during specific implementation, the GF resource is not activated or deactivated. For example, the network device configures a plurality of BWPs for the terminal device, and if a GF resource is configured on each of the plurality of BWPs, it seems to a terminal device side that all of the GF resources configured on these BWPs are activated. In this case, the network device does not need to send, to the terminal device, indication information indicating GF resources that are activated on specific BWPs.

With reference to FIG. 1, the following describes in detail an uplink data sending method according to the embodiments of this application.

As shown in FIG. 2, an embodiment of this application provides an uplink data sending method. The method includes the following steps.

Step 201: A network device sends control information to a terminal device, where the control information is used to indicate the terminal device to send first data on a first resource.

It should be understood that the control information in this embodiment of this application may be DCI, or may be other predefined information, or the like. This is not limited.

Step 202: After receiving the control information, the terminal device stops sending, on the first resource, the first data in a first time domain range when the first resource and a second resource to be used by the terminal device to send second data overlap in the first time domain range in time domain, where a frequency domain range corresponding to the first resource belongs to a first carrier, and a frequency domain range corresponding to the second resource belongs to a second carrier.

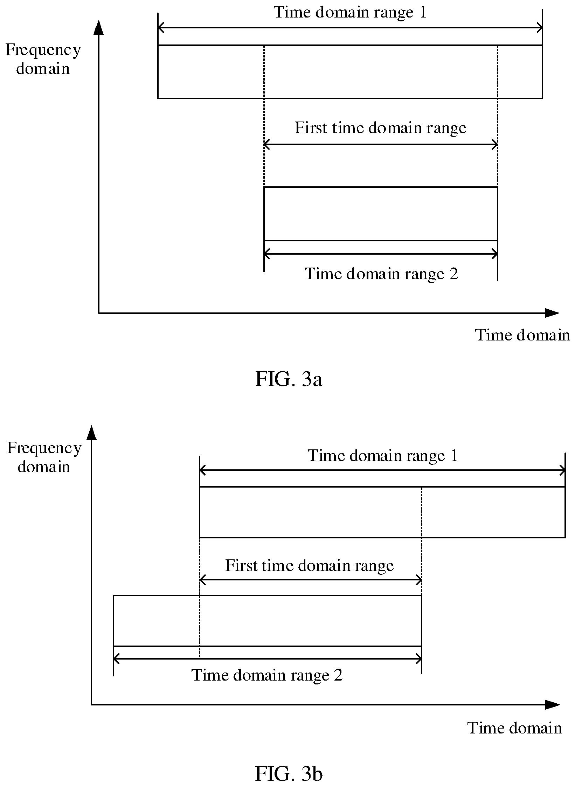

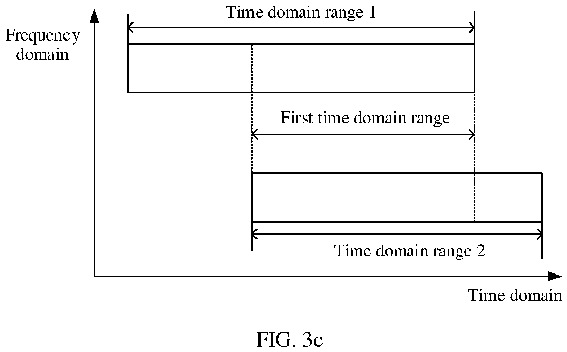

In this embodiment of this application, the first time domain range may be understood as that shown in FIG. 3a, may be understood as that shown in FIG. 3b, or may be understood as that shown in FIG. 3c. In FIG. 3a, FIG. 3b, and FIG. 3c, a time domain range 1 is a time domain range of the first resource in time domain, a time domain range 2 is a time domain range of the second resource in time domain, and the first time domain range is an overlapping part of the time domain range 1 and the time domain range 2.

It should be understood that, in this embodiment of this application, the first data is uplink data scheduled by the network device, and the network device indicates, by using the control information, the terminal device to send the first data on the first resource. For example, a type of the first data may be different from a type of the second data. For example, the first data may be data, of a service type, that does not have a high latency requirement, such as eMBB service data or mMTC service data; and the second data may be uplink data scheduled by the network device, or may be scheduling-free uplink data. If the second data is the uplink data scheduled by the network device, the network device indicates, by using the control information, the terminal device to send the second data on the second resource. If the second data is the scheduling-free uplink data, the terminal device determines to send the second data on the second resource. For example, the second resource may be a GF resource, or may be a GB (grant-based) resource, where the GB resource is a resource to be used by the terminal device to send the uplink data scheduled by the network device. For example, the second data may be eMBB service data, mMTC service data, URLLC service data, or the like. This is not limited.

It should be noted that, in this embodiment of this application, it is not limited that the scheduling-free uplink data needs to be sent on a resource to be used to send the scheduling-free uplink data, and it is not limited that the uplink data scheduled by the network device needs to be sent on the resource indicated by the network device by using the control information.

In addition, in this embodiment of this application, when the first resource and the second resource overlap in the first time domain range in time domain, the terminal device stops sending, on the first resource, the first data in the first time domain range, so that uplink data sending of the terminal device that does not support simultaneous data sending on resources of different carriers is effectively supported.

It should be noted that, in this embodiment of this application, magnitudes of a frequency of the first carrier to which the frequency domain range corresponding to the first resource belongs and a frequency of the second carrier to which the frequency domain range corresponding to the second resource belongs may not be limited. Optionally, when a frequency of a carrier is relatively low, uplink coverage is relatively large, and this helps improve reliability of uplink data transmission. Therefore, optionally, in this embodiment of this application, the frequency of the first carrier is higher than the frequency of the second carrier. For example, the first carrier is a non-SUL carrier, and the second carrier is an SUL carrier; and when the frequency of the first carrier is higher than the frequency of the second carrier, coverage of the first carrier is less than coverage of the second carrier. Therefore, sending the second data on the second resource helps improve reliability of transmitting the second data.

In this embodiment of this application, when the first data and the second data each are data that does not have a high reliability or latency requirement, in the first time domain range, the first data may not be sent on the first resource while the second data may not be sent on the second resource. However, when the second data is data, of a service type, that has relatively high latency and reliability requirements such as URLLC service data, to ensure the relatively high latency and reliability requirements of the service data such as the URLLC service data, this embodiment of this application provides the following several specific implementations.

### Manner 1:

The terminal device stops sending, on the first resource, the first data in the first time domain range; and the terminal device sends, on the second resource, the second data in the first time domain range.

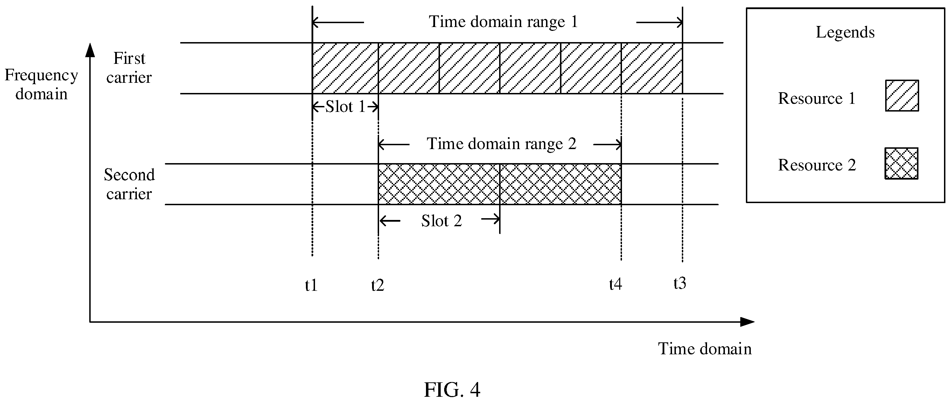

For example, as shown in FIG. 4, a resource 1 is the first resource, a time domain range 1 is a time domain range in which the first data is transmitted on the resource 1 in time domain, a resource 2 is the second resource, and a time domain range 2 is a time domain range in which the second data is transmitted on the resource 2 in time domain. A moment t1 is a start moment of sending the first data in the time domain range 1, a moment t2 is a start moment of sending the second data in the time domain range 2, a moment t3 is an end moment of sending the first data in the time domain range 1, and a moment t4 is an end moment of sending the second data in the time domain range 2. t1 is less than or equal to t2, and t3 is greater than or equal to t4. In the resources shown in FIG. 4, the first time domain range is the time domain range 2. Optionally, the terminal device stops sending the first data on the resource 1 from the moment t2 to the moment t4, and sends the second data on the resource 2 from the moment t2 to the moment t4. Then, after the terminal device stops sending the second data on the resource 2 at the moment t4, the terminal device may continue to send the first data on the resource 1 from the moment t4 to the moment t3, or the terminal device no longer continues to send the first data, or the terminal device directly sends the first data on the second carrier from the moment t4 to the moment t3. This is not limited in this embodiment of this application.

### Manner 2:

Considering a carrier switching time and a processing capability of the terminal device, to reduce interference between the first data and the second data and improve a possibility of successfully sending, by the terminal device on the second resource, the second data in the first time domain range, a time interval needs to be reserved before the second data is sent, and/or a time interval needs to be reserved after the second data is sent. In the two time intervals, the terminal device cannot send the first data on the first resource. Specifically, on the first resource, the terminal device not only stops sending the first data in the first time domain range, but also stops sending the first data in a second time domain range before the first time domain range and/or a third time domain range after the first time domain range. An end moment of the second time domain range overlaps a start moment of the first time domain range, and an end moment of the first time domain range overlaps a start moment of the third time domain range. On the second resource, the terminal device sends the second data in the first time domain range.

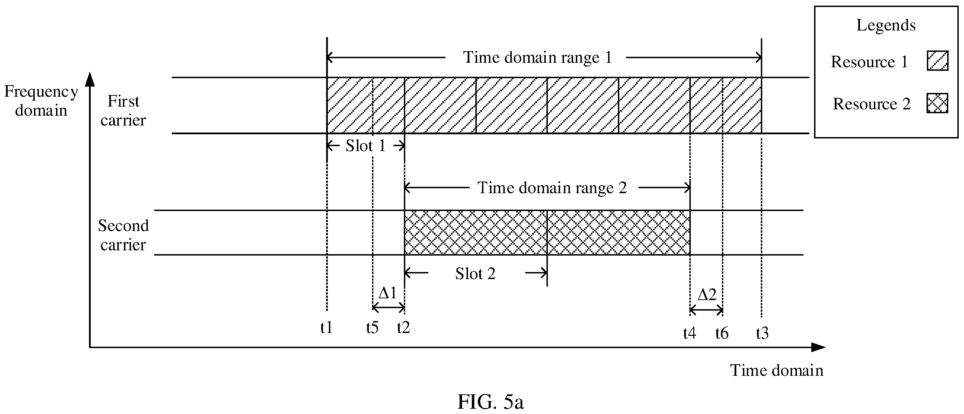

For example, as shown in FIG. 5a, a resource 1 is the first resource, a time domain range 1 is a time domain range in which the first data is sent on the resource 1 in time domain, a resource 2 is the second resource, and a time domain range 2 is a time domain range in which the second data is sent on the resource 2 in time domain. A moment t1 is a start moment of sending the first data in the time domain range 1, a moment t2 is a start moment of sending the second data in the time domain range 2, a moment t3 is an end moment of sending the first data in the time domain range 1, a moment t4 is an end moment of sending the second data in the time domain range 2, a moment t5 is a start moment of stopping sending the first data, and a moment t6 is an end moment of stopping sending the first data. Δ1 is the second time domain range, Δ2 is the third time domain range, t1<t5<t2, and t4<t6<t3. In the resources shown in FIG. 5a, the first time domain range is the time domain range 2. Optionally, the terminal device sends the first data on the resource 1 from the moment t1 to the moment t5, stops sending the first data on the resource 1 from the moment t5 to the moment t6, and sends the second data on the resource 2 from the moment t2 to the moment t4. After the terminal device stops sending the second data on the resource 2 at the moment t4, the terminal device may continue to send the first data on the resource 1 from the moment t6 to the moment t3, or the terminal device no longer sends the first data, or the terminal device directly sends the first data on the second carrier from the moment t4 to the moment t3. This is not limited in this embodiment of this application.

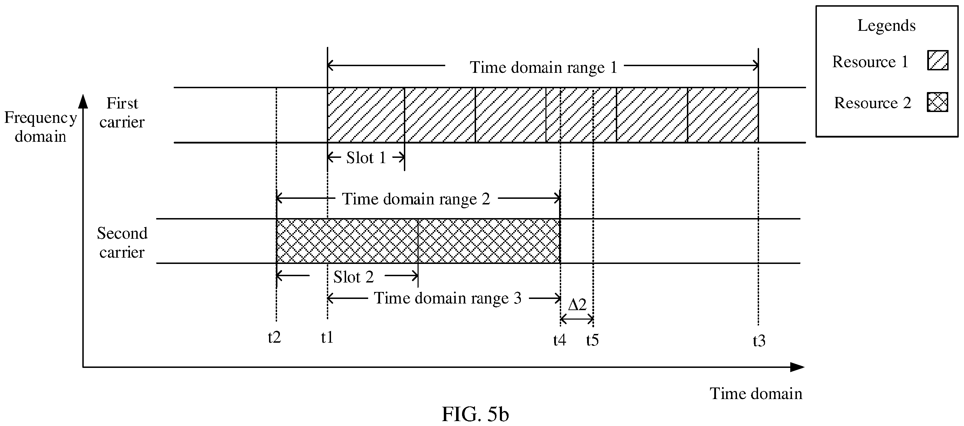

For another example, as shown in FIG. 5b, a resource 1 is the first resource, a time domain range 1 is a time domain range in which the first data is transmitted on the resource 1 in time domain, a resource 2 is the second resource, and a time domain range 2 is a time domain range in which the second data is transmitted on the resource 2 in time domain. A moment t1 is a start moment of sending the first data in the time domain range 1, a moment t2 is a start moment of sending the second data in the time domain range 2, a moment t3 is an end moment of sending the first data in the time domain range 1, and a moment t4 is an end moment of sending the second data in the time domain range 2. Δ2 is the third time domain range, t1 is greater than t2, and t3 is greater than t4. In the resources shown in FIG. 5b, the first time domain range is the time domain range 3. Optionally, the terminal device sends the second data on the resource 2 from the moment t2 to the moment t4; and stops sending the first data on the resource 1 from the moment t1 to the moment t4; and then sends the first data on the resource 1 from the moment t5 to the moment t3, or does not send the first data from the moment t1 to the moment t3, or sends the first data on the second carrier from the moment t4 to the moment t3. This is not limited.

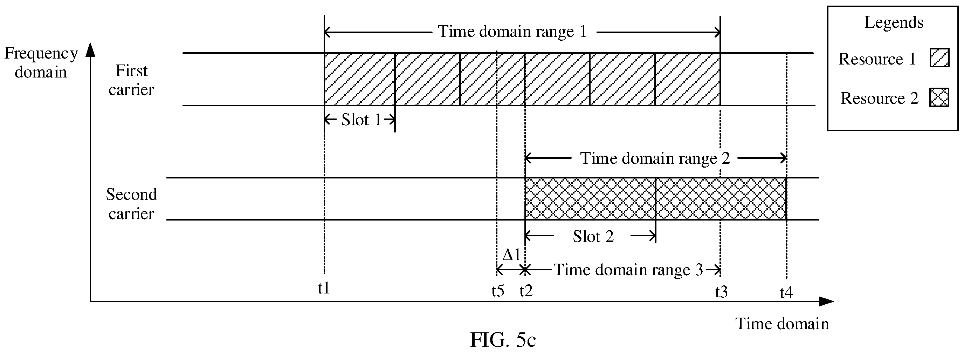

For another example, as shown in FIG. 5c, a resource 1 is the first resource, a time domain range 1 is a time domain range in which the first data is transmitted on the resource 1 in time domain, a resource 2 is the second resource, and a time domain range 2 is a time domain range in which the second data is transmitted on the resource 2 in time domain. A moment t1 is a start moment of sending the first data in the time domain range 1, a moment t2 is a start moment of sending the second data in the time domain range 2, a moment t3 is an end moment of sending the first data in the time domain range 1, and a moment t4 is an end moment of sending the second data in the time domain range 2. Δ1 is the second time domain range, t1 is less than t2, and t3 is less than t4. In the resources shown in FIG. 5c, the first time domain range is the time domain range 3. Optionally, the terminal device sends the first data on the resource 1 from the moment t1 to the moment t5, stops sending the first data on the resource 1 from the moment t5 to the moment t3, and sends the second data on the resource 2 from the moment t2 to the moment t4.

It should be further noted that, in Manner 2 of this embodiment of this application, a length of the second time domain range and/or a length of the third time domain range are/is predefined; or a length of the second time domain range and/or a length of the third time domain range are/is indicated by the network device to the terminal device by sending indication information to the terminal device. The indication information is used to indicate the length of the second time domain range and/or the length of the third time domain range. It should be noted that the length of the second time domain range and the length of the third time domain range may be equal to 0, or may be greater than 0. This is not limited. When the length of the second time domain range and the length of the third time domain range may be equal to 0, this is applicable to a scenario in which the carrier switching time is not considered.

Specifically, in this embodiment of this application, the network device may send the indication information to the terminal device by using physical layer signaling (for example, DCI) and/or higher layer signaling (for example, RRC signaling), or send the indication information to the terminal device by using predefined signaling. This is not limited in this embodiment of this application.

### Manner 3:

The terminal device stops sending, on the first resource, the first data in the first time domain range; and the terminal device sends, on the first resource, the second data in the first time domain range.

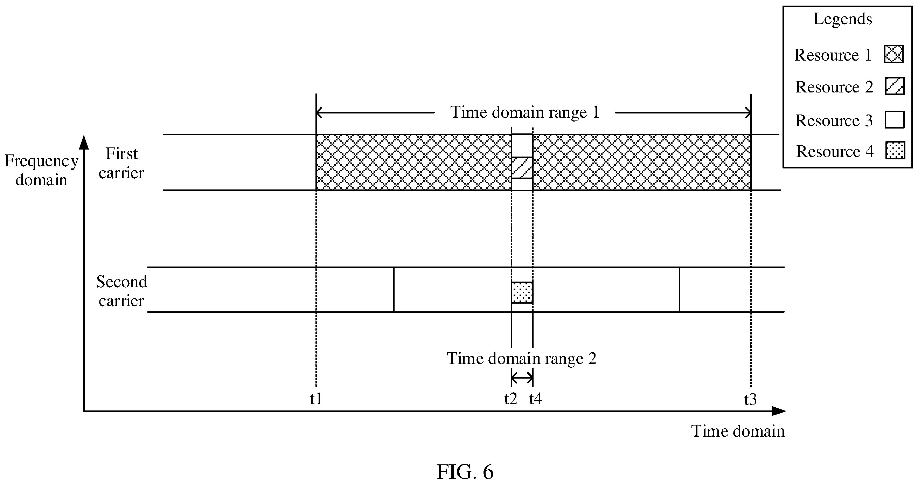

For example, as shown in FIG. 6, resources including a resource 1, a resource 2, and a resource 3 are the first resource, a resource 4 is the second resource, a time domain range 1 is a time domain range in which the first data is transmitted on the first resource in time domain, and a time domain range 2 is a time domain range in which the second data is transmitted on the second resource in time domain. A moment t1 is a start moment of sending the first data in the time domain range 1, a moment t2 is a start moment of sending the second data in the time domain range 2, a moment t3 is an end moment of sending the first data in the time domain range 1, and a moment t4 is an end moment of sending the second data in the time domain range 2. In the resources shown in FIG. 6, the first time domain range is the time domain range 2. Optionally, the terminal device sends the first data on the resource 1 from the moment t1 to the moment t2, stops sending the first data on the resource 2 and the resource 3 from the moment t2 to the moment t4, and sends the second data on the resource 2 from the moment t2 to the moment t4. After the terminal device stops sending the second data on the resource 2 at the moment t4, the terminal device may send the first data on the resource 1 from the moment t4 to the moment t3, or may directly send the first data on the second carrier, or may no longer send the first data. This is not limited in this embodiment of this application.

### Manner 4:

The terminal device sends, on the first resource, the first data and the second data in the first time domain range.

For example, as shown in FIG. 6, resources including a resource 1, a resource 2, and a resource 3 are the first resource, a resource 4 is the second resource, a time domain range 1 is a time domain range in which the first data is transmitted on the first resource in time domain, and a time domain range 2 is a time domain range in which the second data is transmitted on the second resource in time domain. A moment t1 is a start moment of sending the first data in the time domain range 1, a moment t2 is a start moment of sending the second data in the time domain range 2, a moment t3 is an end moment of sending the first data in the time domain range 1, and a moment t4 is an end moment of sending the second data in the time domain range 2. In the resources shown in FIG. 6, the first time domain range is the time domain range 2. Optionally, the terminal device sends the first data on the resource 1 from the moment t1 to the moment t2, and sends the first data and the second data on the resource 3 and the resource 2 from the moment t2 to the moment t4. After the terminal device stops sending the first data and the second data on the resource 2 and the resource 3 at the moment t4, the terminal device may send the first data on the resource 1 from the moment t4 to the moment t3, or may no longer send the first data. Specifically, a specific implementation in which the terminal device sends the first data and the second data on the resource 3 and the resource 2 from the moment t2 to the moment t4 is: The terminal device may perform joint coding on the first data and the second data in a piggyback (piggyback) manner, and then send the first data and the second data only on the resource 2 and the resource 3 in the time domain range 2.

In addition, in this embodiment of this application, when the terminal device stops sending, on the first resource, the first data in the first time domain range, and sends, on the second resource, the second data in the first time domain range, for the terminal device, if the network device receives, on the second resource, the second data in the first time domain range, the network device determines that the terminal device stops sending, on the first resource, the first data in the first time domain range; and if the network device receives, on the first resource, data in the first time domain range, the network device directly discards the data, or does not perform demodulation and the like on the data.

With reference to the mobile communications system architecture shown in FIG. 1, the following describes in detail an uplink data sending method, provided in an embodiment of this application, for a case in which a network device configures a first bandwidth part and a second bandwidth part for a terminal device, where the first bandwidth part is an activated bandwidth part on a first carrier, and the second bandwidth part is an activated bandwidth part on a second carrier.

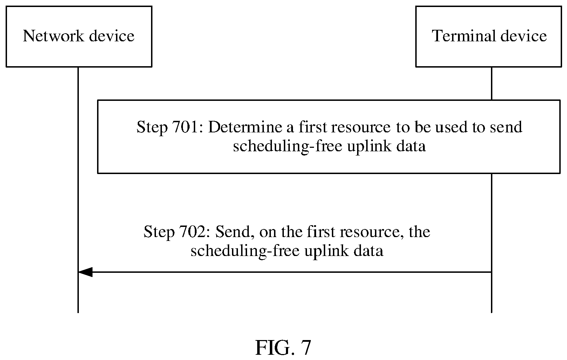

As shown in FIG. 7, an embodiment of this application provides another uplink data sending method. The method includes the following steps.

Step 701: A terminal device determines a first resource to be used to send scheduling-free uplink data, where a frequency domain range corresponding to the first resource belongs to a first bandwidth part or a second bandwidth part, and the first bandwidth part and the second bandwidth part are activated bandwidth parts configured by a network device for the terminal device.

Step 702: The terminal device sends, on the first resource, the scheduling-free uplink data to the network device.

A resource to be used to send scheduling-free uplink data is referred to as a GF resource below, to describe this embodiment of this application.

In this embodiment of this application, when two bandwidth parts on different carries can be both activated, the scheduling-free uplink data is sent by using a GF resource on one of the two activated bandwidth parts, and this helps avoid an error that occurs when the scheduling-free uplink data is sent.

It should be understood that, when a frequency of a second carrier is lower than a frequency of a first carrier, coverage of the second carrier is larger than coverage of the first carrier. Therefore, when the uplink data is sent on the second carrier, a possibility of receiving the data by the network device is higher.

Therefore, in this embodiment of this application, when the frequency of the second carrier is lower than the frequency of the first carrier, to ensure reliability of scheduling-free data transmission, the terminal device determines that the frequency domain range corresponding to the first resource belongs to the second bandwidth part, in other words, the terminal device sends the scheduling-free uplink data on a GF resource on the second bandwidth part.

In this embodiment of this application, that the terminal device sends the scheduling-free uplink data on the GF resource of the second bandwidth part when the frequency of the second carrier is lower than the frequency of the first carrier may be implemented in the following manners. In an optional manner, a GF resource is not configured on the first carrier, and a GF resource is configured only on the second carrier. During specific implementation, a GF resource is not configured on the first bandwidth part, and a GF resource is configured only on the second bandwidth part. In another optional manner, when GF resources are configured on both the first carrier and the second carrier, only a GF resource on the second carrier is activated, and a GF resource on the first carrier is not activated. During specific implementation, when GF resources are configured on both the first bandwidth part and the second bandwidth part, only a GF resource on the second bandwidth part is activated, and a GF resource on the first bandwidth part is not activated. In still another optional manner, the network device sends configuration information to the terminal device, where the configuration information is used to indicate a specific carrier on which a GF resource is used by the terminal device to send the scheduling-free data. For example, the configuration information is used to indicate that a frequency domain range corresponding to the GF resource to be used by the terminal device to send the scheduling-free uplink data belongs to the second bandwidth part, or the configuration information is used to indicate that a frequency domain range corresponding to the GF resource to be used by the terminal device to send the scheduling-free uplink data does not belong to the first bandwidth part, or the configuration information is used to indicate that a frequency domain range corresponding to the GF resource to be used by the terminal device to send the scheduling-free uplink data belongs to the first bandwidth part or the second bandwidth part, where a priority of the first bandwidth part is higher that a priority of the second bandwidth part, or the configuration information is used to indicate that the GF resource to be used by the terminal device to send the scheduling-free uplink data belongs to the second carrier, or the configuration information is used to indicate that the terminal device preferentially uses a GF resource on the second carrier. In yet another optional manner, the terminal device predefines that a carrier corresponding to the GF resource to be used to send the scheduling-free uplink data is the second carrier, for example, predefines that a frequency domain range corresponding to the GF resource belongs to the second bandwidth part.

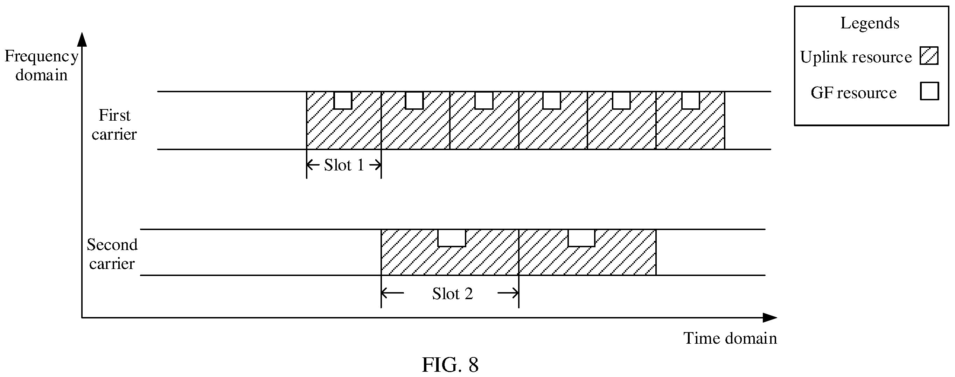

For example, as shown in FIG. 8, the first carrier is a non-SUL carrier, and the second carrier is an SUL carrier. An activated GF resource is configured on the non-SUL carrier, and an activated GF resource is configured on the SUL carrier. In this case, the terminal device sends the scheduling-free uplink data by using the GF resource on the SUL carrier. For example, the terminal device may determine, based on the configuration information sent by the network device, to send the scheduling-free uplink data by using the GF resource on the SUL carrier. The configuration information is used to indicate that a GF resource to be used by the terminal device is the GF resource on the SUL carrier. Alternatively, the terminal device sends, according to a predefined rule, the scheduling-free uplink data by using the GF resource on the SUL carrier. For example, the predefined rule is: When the network device activates both the GF resource configured on the non-SUL carrier and the GF resource configured on the SUL carrier, the GF resource configured on the SUL carrier is preferentially used.

It should be noted that, in this embodiment of this application, the terminal device that performs the uplink data sending method shown in FIG. 7 may alternatively be a first terminal device, or may be a second terminal device. The first terminal device may also be referred to as a central terminal device, and is relatively close to the network device. The second terminal device may also be referred to as an edge terminal device, and is relatively far from the network device.

Further, GF resources on the SUL carrier are usually limited. During specific implementation, the central terminal device is relatively close to a base station, so that when the central terminal device sends scheduling-free uplink data by using a GF resource on the non-SUL carrier, the network device can also receive the scheduling-free uplink data sent by the terminal device. However, the edge terminal device is relatively far from the network device, and if the GF resource on the non-SUL carrier is used, the network device may not receive the scheduling-free uplink data sent by using the GF resource on the non-SUL carrier. Therefore, to ensure reliability of sending the scheduling-free uplink data by the edge terminal device, in this embodiment of this application, the uplink data sending method shown in FIG. 7 is applied to the edge terminal device.

The central terminal device may determine, according to the following rules, that a frequency domain range corresponding to the GF resource to be used to send the scheduling-free uplink data belongs to the first bandwidth part.

In an optional manner, a GF resource is configured on the first carrier, and a GF resource is not configured on the second carrier. During specific implementation, a GF resource may be configured on the first bandwidth part, and a GF resource is not configured on the second bandwidth part. In another optional manner, when GF resources are configured on both the first carrier and the second carrier, only a GF resource on the first carrier is activated, and a GF resource on the second carrier is not activated. During specific implementation, when GF resources are configured on both the first bandwidth part and the second bandwidth part, only a GF resource on the first bandwidth part is activated, and a GF resource on the second bandwidth part is not activated. In still another optional manner, the network device sends configuration information to the terminal device, where the configuration information is used to indicate a specific carrier on which a GF resource is used by the terminal device to send the scheduling-free data. For example, the configuration information is used to indicate that a frequency domain range corresponding to the GF resource to be used by the terminal device to send the scheduling-free uplink data does not belong to the second bandwidth part, or the configuration information is used to indicate that a frequency domain range corresponding to the GF resource to be used by the terminal device to send the scheduling-free uplink data belongs to the first bandwidth part, or the configuration information is used to indicate that a frequency domain range corresponding to the GF resource to be used by the terminal device to send the scheduling-free uplink data belongs to the second bandwidth part or the first bandwidth part, where a priority of the first bandwidth part is higher than a priority of the second bandwidth part, or the configuration information is used to indicate that the GF resource to be used by the terminal device to send the scheduling-free uplink data belongs to the first carrier, or the configuration information is used to indicate that the terminal device preferentially uses a GF resource on the first carrier. In yet another optional manner, the terminal device predefines that a carrier corresponding to the GF resource to be used to send the scheduling-free uplink data is the second carrier, for example, predefines that a frequency domain range corresponding to the GF resource belongs to the first bandwidth part.

Specifically, whether the terminal device is a central terminal device or an edge terminal device is determined by the network device.

In addition, in this embodiment of this application, when the terminal device sends uplink data on the first bandwidth part, where the uplink data may be scheduling-free uplink data, or may be uplink data scheduled by the network device, the terminal device needs to send the scheduling-free uplink data on a GF resource of the second bandwidth part. If the scheduling-free uplink data, corresponding to a service type, that needs to be sent on the GF resource of the second bandwidth part has a relatively high latency requirement, the terminal device sends the scheduling-free uplink data on the GF resource of the second bandwidth part when a first latency is less than or equal to a preset threshold. The first latency includes a time of switching from the first bandwidth part to the second bandwidth part and a time of reaching the first resource.

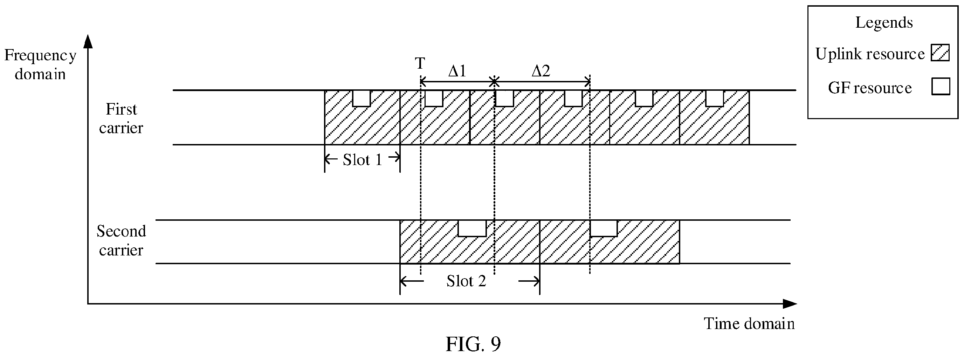

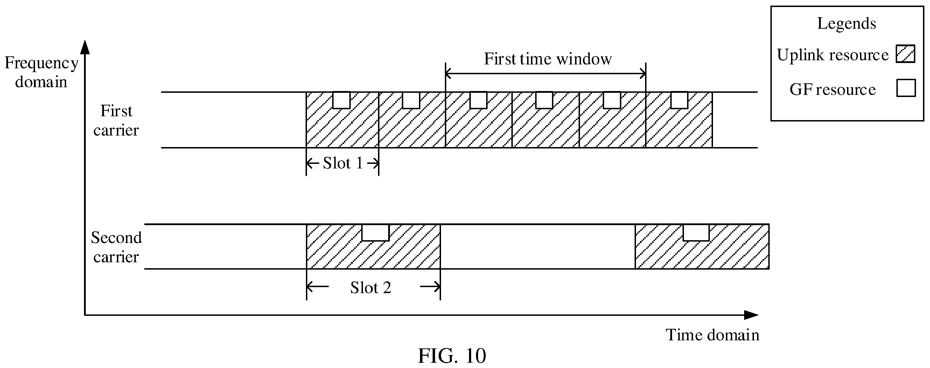

For example, as shown in FIG. 9, the first carrier is a non-SUL carrier, the second carrier is an SUL carrier, a GF resource on the non-SUL carrier is a resource, on the first carrier, used to send scheduling-free uplink data, and a GF resource on the SUL carrier is a resource, on the second carrier, used to send scheduling-free uplink data. In a process in which the terminal device sends the uplink data on the non-SUL carrier, the terminal device determines, at a moment T, that URLLC service data needs to be sent on the GF resource of the SUL carrier. If a time required for switching from the non-SUL carrier to the SUL carrier is Δt1, and a time of reaching the GF resource on the SUL carrier after the SUL carrier is switched to is Δt2, when (Δt1+Δt2) is less than the preset threshold, the terminal device switches from the non-SUL carrier to the SUL carrier, and sends the URLLC service data on the GF resource of the SUL carrier. In addition, when (Δt1+Δt2) is greater than the preset threshold, if sending of the URLLC service data on the GF resource of the non-SUL carrier can ensure a latency requirement of the URLLC service data, the terminal device sends the URLLC service data on the GF resource of the non-SUL carrier. However, when (Δt1+Δt2) is greater than a preset threshold, if sending of the URLLC service data on the GF resource of the non-SUL carrier cannot ensure the latency requirement of the URLLC service data, the terminal device switches from the non-SUL carrier to the SUL carrier, and sends the URLLC service data on the GF resource of the SUL carrier. It should be further noted that when there is no available GF resource on the SUL carrier, as shown in FIG. 10, when the terminal device needs to send URLLC service data to a radio access network device in a first time window, because there is no available GF resource on the SUL carrier in the first time window, the terminal device can send the URLLC service data only on the GF resource of the non-SUL carrier.

It should be noted that, in specific descriptions of the uplink data sending methods shown in FIG. 2 and FIG. 7, the first resource and the second resource in the uplink data sending method shown in FIG. 2 and the first resource and the second resource in the uplink data sending method shown in FIG. 7 are independent of each other, and are not associated with each other.

The uplink data sending methods shown in FIG. 2 and FIG. 7 are for a terminal device in a connected (connected) state. When the terminal device is in an idle (idle) state, if the terminal device needs to send scheduling-free uplink data (for example, URLLC service data) or data with a relatively small data volume, to ensure data transmission reliability, an embodiment of this application further provides an initial access method.

The following describes in detail the embodiments of this application with reference to the mobile communications system architecture shown in FIG. 1.

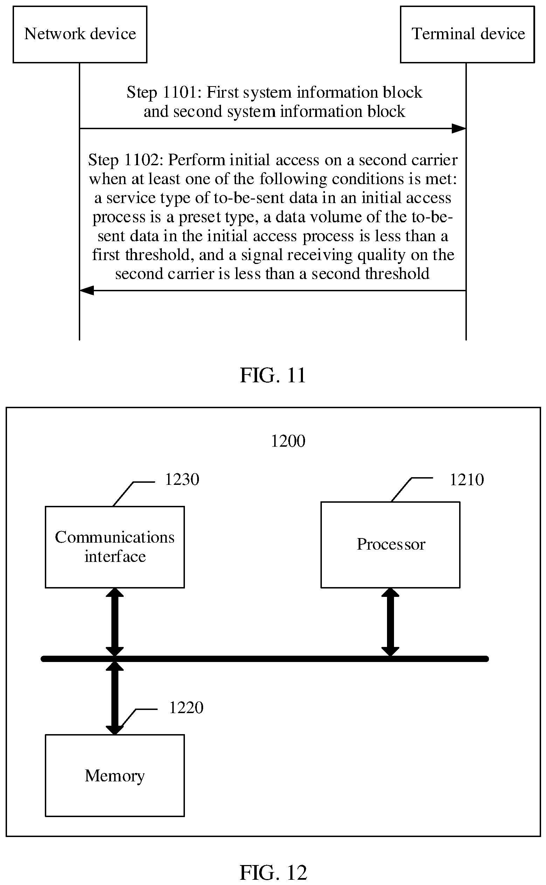

As shown in FIG. 11, an embodiment of this application provides an initial access method. The method includes:
Step 1101: A terminal device receives a first system information block and a second system information block, where the first system information block indicates a location of a resource to be used for initial access on a first carrier, the second system information block is used to indicate a location of a resource to be used for initial access on a second carrier, and a frequency of the first carrier is higher than a frequency of the second carrier.
Step 1102: The terminal device performs the initial access on the second carrier when at least one of the following conditions is met:
   a service type of to-be-sent data in an initial access process is a preset type, a data volume of the to-be-sent data in the initial access process is less than a first threshold, and a signal receiving quality on the first carrier is less than a second threshold.

Specifically, in a process of initially accessing a network device, the terminal device first receives a synchronization signal block (synchronous signal block, SSB). The SSB includes a physical broadcast channel (physical broadcast channel, PBCH), a primary synchronization signal (primary synchronization signal, PSS), and a secondary synchronization signal (secondary synchronization signal, SSS). Then, the terminal device obtains information such as a system bandwidth and a control channel configuration by using the PBCH, further receives the first system information block (system information block, SIB) and the second SIB, obtains, by using the first SIB, the location of the resource, on the first carrier, used for the initial access, and obtains, by using the second SIB, the location of the resource, on the second carrier, used for the initial access. The resource to be used for the initial access may be a physical random access channel (physical random access channel, PRACH). When the terminal device performs the initial access on the second carrier, the terminal device sends, on a PRACH on the second carrier, a random access request (preamble) to the network device. After receiving a random access response (random access response, RAR) sent by the network device, the terminal device sends an msg 3 on a corresponding uplink time-frequency resource based on the RAR. The RAR includes location information about the uplink time-frequency resource used to send the msg 3.

Uplink frequency domain resource in this embodiment of this application is a physical resource to be used for uplink communication in frequency domain. For example, the frequency domain resource may be a BWP, a resource block, a subband, a narrowband, or the like. The frequency domain resource may also be referred to as a bandwidth resource, a bandwidth part, a frequency resource part, a part of frequency resources, or another name. When the bandwidth resource is a segment of contiguous resources in system frequency resources, the bandwidth resource may also be referred to as a subband, a narrowband, or another name. This is not limited in this embodiment of this application.

For example, the first carrier is a non-SUL carrier, and the second carrier is an SUL carrier.

In this embodiment of this application, when at least one of the foregoing conditions is met, the terminal device performs the initial access on the second carrier. In other words, the terminal device may send the random access request to the network device by using a frequency domain resource on the second carrier. The location information, included in the RAR sent by the network device to the terminal device, about the uplink time-frequency resource used to send the msg 3 may indicate the frequency domain resource on the second carrier. This helps improve reliability of sending the msg 3.

The following describes each condition in step 1202.

A service type of to-be-sent data in an initial access process is a preset type. For example, the preset type may include a type of service data that requires a latency to be less than a specific threshold, a type of service data with high reliability, or the like, for example, a type of URLLC service data.

For example, second carrier is the SUL carrier, the to-be-sent data is URLLC service data, and the preset type includes a type of the URLLC service data. If the terminal device performs the initial access on the SUL carrier when the URLLC service data is to be sent in the initial access process, the terminal device sends an msg 3 to the radio access network device on the SUL carrier, and the msg 3 includes the URLLC service data.

A data volume of the to-be-sent data in the initial access process is less than a first threshold. In this embodiment of this application, the first threshold may be correspondingly set based on an actual requirement. Specifically, the first threshold may be predefined, or may be indicated by the radio access network device to the terminal device last time when the terminal device accesses a network. This is not limited in this embodiment of this application.

For example, the to-be-sent data is mMTC service data, and a data volume of the mMTC service data is less than the first threshold. If the terminal device performs the initial access on the SUL carrier when the mMTC service data is to be sent in the initial access process, the terminal device sends an msg 3 to the radio access network device on the SUL carrier, and the msg 3 includes the mMTC service data.

A signal receiving quality on the first carrier is less than a second threshold. In this embodiment of this application, the second threshold may be correspondingly set based on an actual requirement. Specifically, the second threshold may be predefined, or may be indicated by the radio access network device to the terminal device last time when the terminal device accesses a network. This is not limited in this embodiment of this application.

For example, when the signal receiving quality on the first carrier is less than the second threshold, the terminal device performs the initial access on the SUL carrier. It should be understood that, during specific implementation, the signal receiving quality may be indicated by using reference signal receiving power (reference signal receiving power, RSRP), reference signal receiving quality (reference signal receiving quality, RSRQ), or the like.

In the foregoing embodiments provided in this application, the methods provided in the embodiments of this application are separately described from a perspective of interaction between the network device and the terminal device. To implement functions in the foregoing methods provided in the embodiments of this application, the base station and the terminal device may include a hardware structure and/or a software module, and implement the foregoing functions in a form of the hardware structure, the software module, or a combination of the hardware structure and the software module. Whether a function in the foregoing functions is performed in a manner of the hardware structure, the software module, or the combination of the hardware structure and the software module depends on a specific application and a design constraint condition of the technical solution.

Based on a same concept, FIG. 12 shows an apparatus 1200 provided in this application. The apparatus 1200 may be a terminal device, or may be an apparatus that can support the terminal device in implementing a function of the terminal device in the method of FIG. 2. For example, the apparatus 1200 may alternatively be an apparatus (for example, a chip or a chip system) in the terminal device. It should be noted that, in this embodiment of this application, the chip system may include a chip, or may include a chip and another discrete device.

The apparatus 1200 includes at least one processor 1210, configured to implement a function of the terminal device in the uplink data sending method provided in the embodiments of this application.

The apparatus 1200 may further include at least one memory 1220, configured to store a program instruction and/or data. The memory 1220 is coupled to the processor 1210. The coupling in this embodiment of this application is an indirect coupling or a communication connection between apparatuses, units, or modules, may be in an electrical form, a mechanical form, or another form, and is used for information exchange between the apparatuses, the units, or the modules. The processor 1210 may cooperate with the memory 1220. The processor 1210 may execute the program instruction stored in the memory 1220. At least one of the at least one memory 1220 may be included in the processor 1210.

The apparatus 1200 may further include a communications interface 1230, and the apparatus 1200 may exchange information with another device through the communications interface 1230. The communications interface 1230 may be a circuit, a bus, a transceiver, or any other apparatus that may be configured to perform information exchange. For example, the another device may be another terminal device or another network device. The processor 1210 may send and receive data through the communications interface 1230. For example, the communications interface 1230 is configured to receive control information sent by a network device.

In this embodiment of this application, a specific connection medium between the communications interface 1230, the processor 1210, and the memory 1220 is not limited. In this embodiment of this application, in FIG. 12, the memory 1220, the processor 1210, and the communications interface 1230 are connected by using a bus. The bus is indicated by using a thick line in FIG. 12. A connection manner between other components is merely an example for description, and is not limited thereto. The bus may be classified into an address bus, a data bus, a control bus, and the like. For ease of representation, only one thick line is used to represent the bus in FIG. 12, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in the embodiments of this application. The general-purpose processor may be a microprocessor, any conventional processor, or the like. Steps of the method disclosed with reference to the embodiments of this application may be directly performed by a hardware processor, or may be performed by using a combination of hardware and software modules in the processor.

In this embodiment of this application, the memory may be a nonvolatile memory, such as a hard disk drive (hard disk drive, HDD) or a solid-state drive (solid-state drive, SSD), or may be a volatile memory (volatile memory), such as a random access memory (random access memory, RAM). The memory may alternatively be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store a program instruction and/or data.

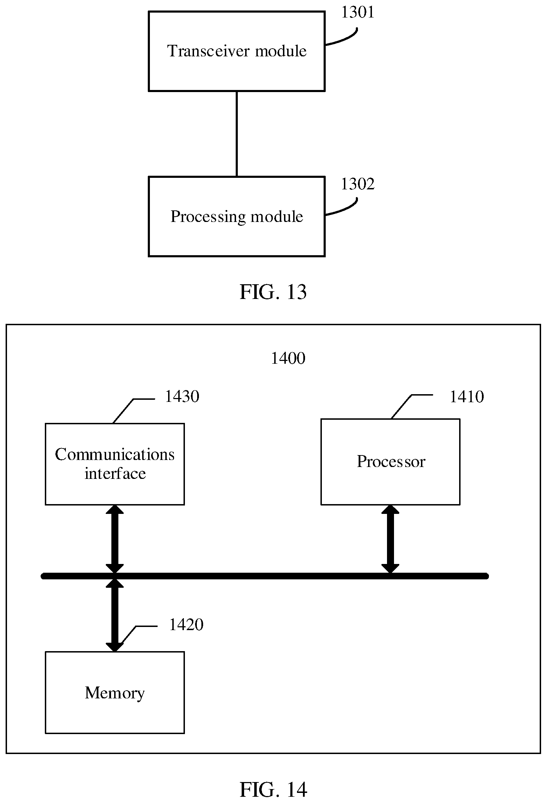

FIG. 13 shows another embodiment of an apparatus provided in this application. The apparatus may be a terminal device, or may be an apparatus (such as a chip or a chip system) in the terminal device, and can implement the method performed by the terminal device in any embodiment of FIG. 2.

The apparatus includes a transceiver module 1301 and a processing module 1302. The transceiver module 1302 is configured to receive control information sent by a network device, where the control information is used to indicate the apparatus to send first data on a first resource. When the first resource and a second resource to be used by the transceiver 1301 to send second data overlap in a first time domain range in time domain, the processing module 1302 is configured to trigger the transceiver module 1301 to stop sending, on the first resource, the first data in the first time domain range. A frequency domain range corresponding to the first resource belongs to a first carrier, and a frequency domain range corresponding to the second resource belongs to a second carrier.

In a possible design, a frequency of the first carrier is higher than a frequency of the second carrier.

In a possible design, the transceiver module 1301 is further configured to send, on the second resource, the second data in the first time domain range.

In a possible design, the processing module 1302 is further configured to trigger the transceiver module 1301 to stop sending, on the first resource, the first data in a second time domain range before the first time domain range and/or a third time domain range after the first time domain range. An end moment of the second time domain range overlaps a start moment of the first time domain range, and an end moment of the first time domain range overlaps a start moment of the third time domain range.

In a possible design, a length of the second time domain range and/or a length of the third time domain range are/is predefined; or the transceiver module 1301 is further configured to receive indication information sent by the network device, where the indication information is used to indicate a length of the second time domain range and/or a length of the third time domain range.

In a possible design, the second carrier is an SUL carrier, and the first carrier is a non-SUL carrier.

In a possible design, the second data is URLLC service data.

It should be understood that the apparatus may be configured to implement the steps performed by the terminal device in the uplink data sending method shown in FIG. 2 in the embodiments of this application. For related features, refer to the foregoing descriptions. Details are not described herein again.

Based on a same concept, FIG. 14 shows an apparatus 1400 provided in this application. The apparatus 1400 may be a network device, or may be an apparatus that can support the network device in implementing a function of the network device in the method of FIG. 2. For example, the apparatus 1400 may be an apparatus (for example, a chip or a chip system) in the network device. It should be noted that, in this embodiment of this application, the chip system may include a chip, or may include a chip and another discrete device.

The apparatus 1400 includes at least one processor 1410, configured to implement a function of the network device in the uplink data sending method provided in the embodiments of this application. The apparatus 1400 may further include at least one memory 1420, configured to store a program instruction and/or data. The memory 1420 is coupled to the processor 1410. The processor 1410 may cooperate with the memory 1420. The processor 1410 may execute the program instruction stored in the memory 1420. At least one of the at least one memory 1420 may be included in the processor 1410.

The apparatus 1400 may further include a communications interface 1430, and the apparatus 1400 may exchange information with another device through the communications interface 1430. The communications interface 1430 may be a circuit, a bus, a transceiver, or any other apparatus that may be configured to perform information exchange. For example, the another device may be another terminal device or another network device. The processor 1410 may send and receive data through the communications interface 1430. For example, the communications interface 1430 is configured to send control information to a terminal device.

In this embodiment of this application, a specific connection medium between the communications interface 1430, the processor 1410, and the memory 1420 is not limited. In this embodiment of this application, in FIG. 14, the memory 1420, the processor 1410, and the communications interface 1430 are connected by using a bus. The bus is indicated by using a thick line in FIG. 14. A connection manner between other components is merely an example for description, and is not limited thereto. The bus may be classified into an address bus, a data bus, a control bus, and the like. For ease of representation, only one thick line is used to represent the bus in FIG. 14, but this does not mean that there is only one bus or only one type of bus.

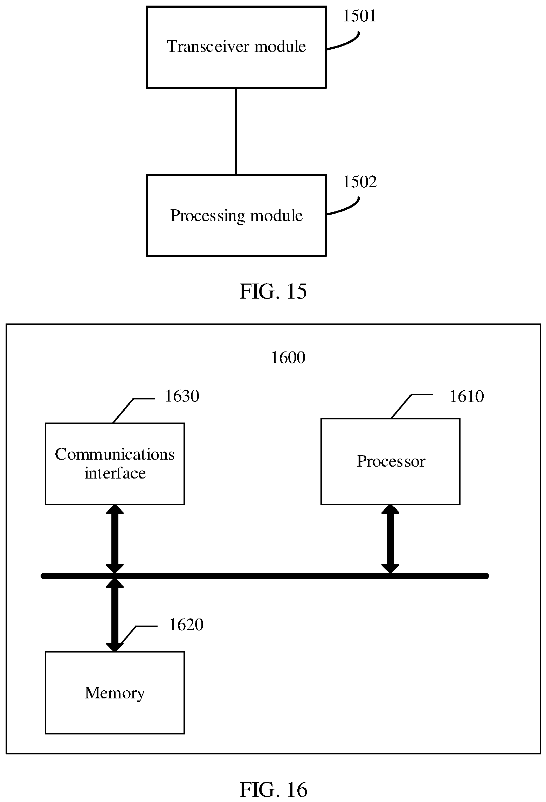

FIG. 15 shows another embodiment of an apparatus provided in this application. The apparatus may be a network device, or may be an apparatus (such as a chip or a chip system) in the network device, and can implement the method performed by the network device in any embodiment of FIG. 2.

The apparatus includes a transceiver module 1501 and a processing module 1502. The transceiver module 1501 is configured to send control information to a terminal device, where the control information is used to indicate the terminal device to send first data on a first resource. The processing module 1502 is configured to: if the transceiver module 1501 receives, on a second resource in a first time domain range, second data sent by the terminal device, determine that the terminal device stops sending, on the first resource, the first data in the first time domain range. The second resource and the first resource overlap in the first time domain range in time domain, a frequency domain range corresponding to the first resource belongs to a first carrier, and a frequency domain range corresponding to the second resource belongs to a second carrier.

In a possible design, a frequency of the first carrier is higher than a frequency of the second carrier.

In a possible design, the processing module 1502 is further configured to determine that the terminal device stops sending, on the first resource, the first data in a second time domain range before the first time domain range and/or a third time domain range after the first time domain range. An end moment of the second time domain range overlaps a start moment of the first time domain range, and an end moment of the first time domain range overlaps a start moment of the third time domain range.

In a possible design, a length of the second time domain range and/or a length of the third time domain range are/is predefined; or the transceiver module 1501 is further configured to send indication information to the terminal device, where the indication information is used to indicate a length of the second time domain range and/or a length of the third time domain range.

In a possible design, the first carrier is a non-SUL carrier, and the second carrier is an SUL carrier.

In a possible design, the second data is URLLC service data.

It should be understood that the apparatus may be configured to implement the steps performed by the network device in the uplink data sending method shown in FIG. 2 in the embodiments of this application. For related features, refer to the foregoing descriptions. Details are not described herein again.

Based on a same concept, FIG. 16 shows an apparatus 1600 provided in this application. The apparatus 1600 may be a terminal device, or may be an apparatus that can support the terminal device in implementing a function of the terminal device in the method of FIG. 7. For example, the apparatus 1600 may alternatively be an apparatus (for example, a chip or a chip system) in the terminal device. It should be noted that, in this embodiment of this application, the chip system may include a chip, or may include a chip and another discrete device.

The apparatus 1600 includes at least one processor 1610, configured to implement a function of the terminal device in the uplink data sending method provided in the embodiments of this application.

The apparatus 1600 may further include at least one memory 1620, configured to store a program instruction and/or data. The memory 1620 is coupled to the processor 1610. The coupling in this embodiment of this application is an indirect coupling or a communication connection between apparatuses, units, or modules, may be in an electrical form, a mechanical form, or another form, and is used for information exchange between the apparatuses, the units, or the modules. The processor 1610 may cooperate with the memory 1620. The processor 1610 may execute the program instruction stored in the memory 1620. At least one of the at least one memory 1620 may be included in the processor 1610.

The apparatus 1600 may further include a communications interface 1630, and the apparatus 1600 may exchange information with another device through the communications interface 1630. The communications interface 1630 may be a circuit, a bus, a transceiver, or any other apparatus that may be configured to perform information exchange. For example, the another device may be another terminal device or another network device. The processor 1610 may send and receive data through the communications interface 1630. For example, the communications interface 1630 is configured to send, on a first resource, scheduling-free uplink data to a network device.

In this embodiment of this application, a specific connection medium between the communications interface 1630, the processor 1610, and the memory 1620 is not limited. In this embodiment of this application, in FIG. 16, the memory 1620, the processor 1610, and the communications interface 1630 are connected by using a bus. The bus is indicated by using a thick line in FIG. 16. A connection manner between other components is merely an example for description, and is not limited thereto. The bus may be classified into an address bus, a data bus, a control bus, and the like. For ease of representation, only one thick line is used to represent the bus in FIG. 16, but this does not mean that there is only one bus or only one type of bus.

In the embodiments of this application, the processor may be a general-purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in the embodiments of this application. The general-purpose processor may be a microprocessor, any conventional processor, or the like. Steps of the method disclosed with reference to the embodiments of this application may be directly performed by a hardware processor, or may be performed by using a combination of hardware and software modules in the processor.

In this embodiment of this application, the memory may be a nonvolatile memory, for example, an HDD or an SSD; or may be a volatile memory, for example, a RAM. The memory may alternatively be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store a program instruction and/or data.

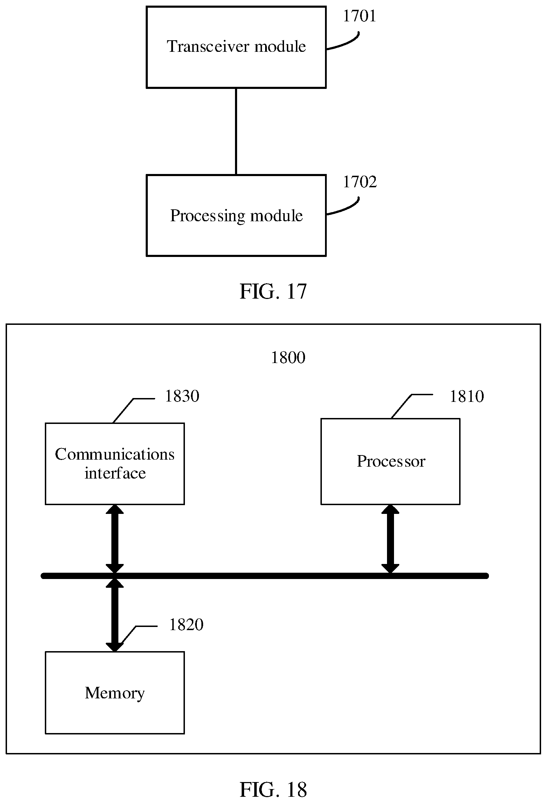

FIG. 17 shows another embodiment of an apparatus provided in this application. The apparatus may be a terminal device, or may be an apparatus (such as a chip or a chip system) in the terminal device, and can implement the method performed by the terminal device in any embodiment of FIG. 7.

The apparatus includes a transceiver module 1701 and a processing module 1702. The processing module 1702 is configured to determine a first resource to be used to send scheduling-free uplink data. A frequency domain range corresponding to the first resource belongs to a first bandwidth part or a second bandwidth part, the first bandwidth part and the second bandwidth part are activated bandwidth parts configured by a network device for the apparatus, the first bandwidth part is an activated bandwidth part on a first carrier, and the second bandwidth part is an activated bandwidth part on a second carrier. The transceiver module 1701 is configured to send, on the first resource, the scheduling-free uplink data to the network device.

In a possible design, a frequency of the second carrier is lower than a frequency of the first carrier, and the frequency domain range corresponding to the first resource belongs to the second bandwidth part.

In a possible design, a configured second resource to be used to send the scheduling-free uplink data is not activated on the first bandwidth part, or a second resource to be used to send the scheduling-free uplink data is not configured on the first bandwidth part.

In a possible design, the transceiver module 1701 is further configured to receive configuration information sent by the network device, and the configuration information is used to indicate that the frequency domain range corresponding to the resource to be used by the transceiver module to send the scheduling-free uplink data belongs to the second bandwidth part.

In a possible design, when a frequency domain resource to be used by the transceiver module 1701 to send uplink data belongs to the first bandwidth part, if a first latency is less than or equal to a preset threshold, the frequency domain range corresponding to the first resource belongs to the second bandwidth part. The first latency includes a time of switching from the first bandwidth part to the second bandwidth part and a time of reaching the first resource.

In a possible design, the first carrier is a non-SUL carrier, and the second carrier is an SUL carrier.

In a possible design, the scheduling-free uplink data is URLLC service data.

It should be understood that the apparatus may be configured to implement the steps performed by the terminal device in the uplink data sending method shown in FIG. 7 in the embodiments of this application. For related features, refer to the foregoing descriptions. Details are not described herein again.

Based on a same concept, FIG. 18 shows an apparatus 1800 provided in this application. The apparatus 1800 may be a network device, or may be an apparatus that can support the network device in implementing a function of the network device in the method of FIG. 7. For example, the apparatus 1800 may be an apparatus (for example, a chip or a chip system) in the network device. It should be noted that, in this embodiment of this application, the chip system may include a chip, or may include a chip and another discrete device.

The apparatus 1800 includes at least one processor 1810, configured to implement a function of the network device in the uplink data sending method provided in the embodiments of this application. The apparatus 1800 may further include at least one memory 1820, configured to store a program instruction and/or data. The memory 1820 is coupled to the processor 1810. The processor 1810 may cooperate with the memory 1820. The processor 1810 may execute the program instruction stored in the memory 1820. At least one of the at least one memory 1820 may be included in the processor 1810.

The apparatus 1800 may further include a communications interface 1830, and the apparatus 1800 may exchange information with another device through the communications interface 1830. The communications interface 1830 may be a circuit, a bus, a transceiver, or any other apparatus that may be configured to perform information exchange. For example, the another device may be another terminal device or another network device. The processor 1810 may send and receive data through the communications interface 1830. For example, the communications interface 1830 is configured to receive, on a first resource, scheduling-free uplink data sent by a terminal device.

In this embodiment of this application, a specific connection medium between the communications interface 1830, the processor 1810, and the memory 1820 is not limited. In this embodiment of this application, in FIG. 18, the memory 1820, the processor 1810, and the communications interface 1830 are connected by using a bus. The bus is indicated by using a thick line in FIG. 18. A connection manner between other components is merely an example for description, and is not limited thereto. The bus may be classified into an address bus, a data bus, a control bus, and the like. For ease of representation, only one thick line is used to represent the bus in FIG. 18, but this does not mean that there is only one bus or only one type of bus.

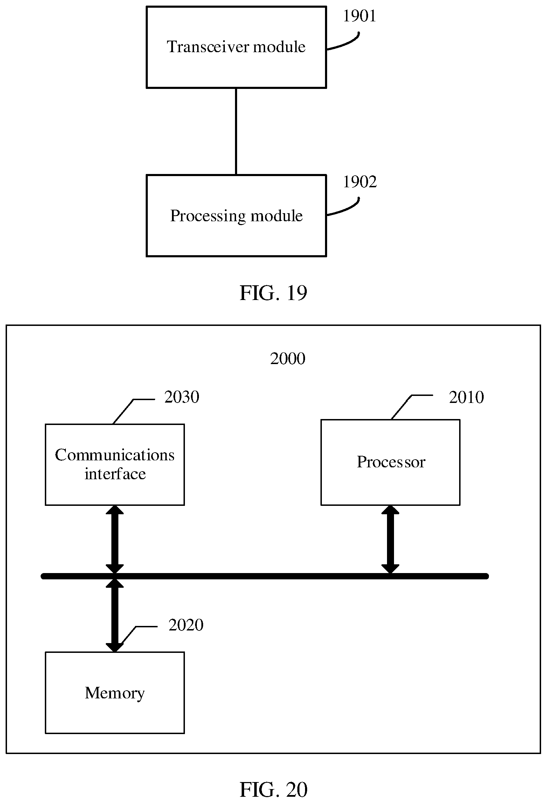

FIG. 19 shows another embodiment of an apparatus provided in this application. The apparatus may be a network device, or may be an apparatus (such as a chip or a chip system) in the network device, and can implement the method performed by the network device in any embodiment of FIG. 7.

The apparatus includes a transceiver module 1901 and a processing module 1902. The processing module 1902 is configured to configure a first bandwidth part and a second bandwidth part for a terminal device. The first bandwidth part is an activated bandwidth part on a first carrier, and the second bandwidth part is an activated bandwidth part on a second carrier. The transceiver module 1901 is configured to receive, on a first resource, scheduling-free uplink data sent by the terminal device. A frequency domain range corresponding to the first resource belongs to the first bandwidth part or the second bandwidth part.

In a possible design, a frequency of the second carrier is lower than a frequency of the first carrier, and the frequency domain range corresponding to the first resource belongs to the second bandwidth part.

In a possible design, a configured second resource to be used to send the scheduling-free uplink data is not activated on the first bandwidth part, or a second resource to be used to send the scheduling-free uplink data is not configured on the first bandwidth part.

In a possible design, the transceiver module 1901 is further configured to send configuration information to the terminal device, and the configuration information is used to indicate that the frequency domain range corresponding to the resource to be used by the terminal device to send the scheduling-free uplink data belongs to the second bandwidth part.

In a possible design, the first carrier is a non-SUL carrier, and the second carrier is an SUL carrier.

In a possible design, the scheduling-free uplink data is URLLC service data.

It should be understood that the apparatus may be configured to implement the steps performed by the network device in the uplink data sending method shown in FIG. 7 in the embodiments of this application. For related features, refer to the foregoing descriptions. Details are not described herein again.

Based on a same concept, FIG. 20 shows an apparatus 2000 provided in this application. The apparatus 2000 may be a terminal device, or may be an apparatus that can support the terminal device in implementing a function of the terminal device in the method of FIG. 11. For example, the apparatus 2000 may alternatively be an apparatus (for example, a chip or a chip system) in the terminal device. It should be noted that, in this embodiment of this application, the chip system may include a chip, or may include a chip and another discrete device.

The apparatus 2000 includes at least one processor 2010, configured to implement a function of the terminal device in the initial access method provided in the embodiments of this application.

The apparatus 2000 may further include at least one memory 2020, configured to store a program instruction and/or data. The memory 2020 is coupled to the processor 2010. The coupling in this embodiment of this application is an indirect coupling or a communication connection between apparatuses, units, or modules, may be in an electrical form, a mechanical form, or another form, and is used for information exchange between the apparatuses, the units, or the modules. The processor 2010 may cooperate with the memory 2020. The processor 2010 may execute the program instruction stored in the memory 2020. At least one of the at least one memory 2020 may be included in the processor 2010.

The apparatus 2000 may further include a communications interface 2030, and the apparatus 2000 may exchange information with another device through the communications interface 2030. The communications interface 2030 may be a circuit, a bus, a transceiver, or any other apparatus that may be configured to perform information exchange. For example, the another device may be another terminal device or another network device. The processor 2010 may send and receive data through the communications interface 2030. For example, the communications interface 2030 is configured to receive a first system information block and a second system information block.

In this embodiment of this application, a specific connection medium between the communications interface 2030, the processor 2010, and the memory 2020 is not limited. In this embodiment of this application, in FIG. 20, the memory 2020, the processor 2010, and the communications interface 2030 are connected by using a bus. The bus is indicated by using a thick line in FIG. 20. A connection manner between other components is merely an example for description, and is not limited thereto. The bus may be classified into an address bus, a data bus, a control bus, and the like. For ease of representation, only one thick line is used to represent the bus in FIG. 20, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in the embodiments of this application. The general-purpose processor may be a microprocessor, any conventional processor, or the like. Steps of the method disclosed with reference to the embodiments of this application may be directly performed by a hardware processor, or may be performed by using a combination of hardware and software modules in the processor.

In this embodiment of this application, the memory may be a nonvolatile memory, for example, an HDD or an SSD; or may be a volatile memory, for example, a RAM. The memory may alternatively be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store a program instruction and/or data.

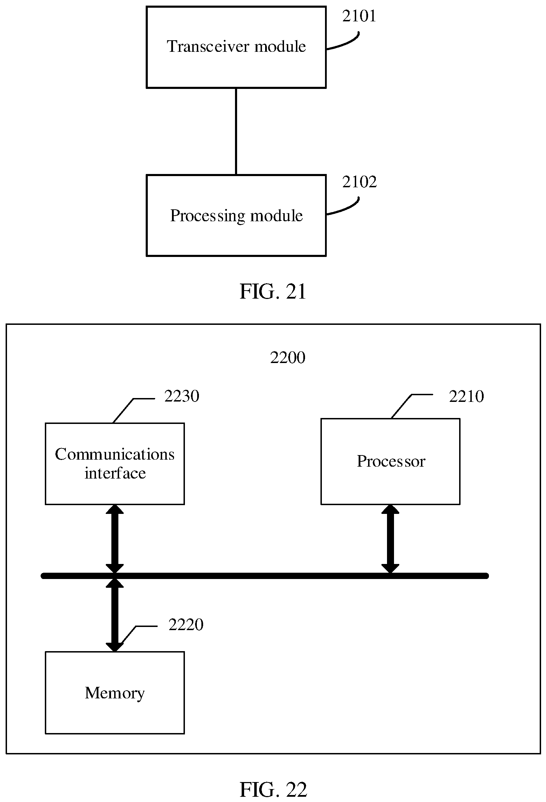

FIG. 21 shows another embodiment of an apparatus provided in this application. The apparatus may be a terminal device, or may be an apparatus (such as a chip or a chip system) in the terminal device, and can implement the method performed by the terminal device in any embodiment of FIG. 11.

The apparatus includes a transceiver module 2101 and a processing module 2102. The transceiver module 2101 is configured to receive a first system information block and a second system information block, where the first system information block indicates a location of a resource to be used for initial access on a first carrier, the second system information block is used to indicate a location of a resource to be used for initial access on a second carrier, and a frequency of the first carrier is higher than a frequency of the second carrier. The processing module 2102 is configured to perform the initial access on the second carrier when at least one of the following conditions is met:
a service type of to-be-sent data in an initial access process is a preset type, a data volume of the to-be-sent data in the initial access process is less than a first threshold, and a signal receiving quality on the first carrier is less than a second threshold.

In a possible design, the first carrier is a non-SUL carrier, and the second carrier is an SUL carrier.

In a possible design, the preset type includes a type of URLLC service data.

It should be understood that the apparatus may be configured to implement the steps performed by the terminal device in the initial access method shown in FIG. 11 in the embodiments of this application. For related features, refer to the foregoing descriptions. Details are not described herein again.

Based on a same concept, FIG. 22 shows an apparatus 2200 provided in this application. The apparatus 2200 may be a network device, or may be an apparatus that can support the network device in implementing a function of the network device in the method of FIG. 11. For example, the apparatus 2200 may be an apparatus (for example, a chip or a chip system) in the network device. It should be noted that, in this embodiment of this application, the chip system may include a chip, or may include a chip and another discrete device.

The apparatus 2200 includes at least one processor 2210, configured to implement a function of the network device in the initial access method provided in the embodiments of this application. The apparatus 2200 may further include at least one memory 2220, configured to store a program instruction and/or data. The memory 2220 is coupled to the processor 2210. The processor 2210 may cooperate with the memory 2220. The processor 2210 may execute the program instruction stored in the memory 2220. At least one of the at least one memory 2220 may be included in the processor 2210.

The apparatus 2200 may further include a communications interface 2230, and the apparatus 2200 may exchange information with another device through the communications interface 2230. The communications interface 2230 may be a circuit, a bus, a transceiver, or any other apparatus that may be configured to perform information exchange. For example, the another device may be another terminal device or another network device. The processor 2210 may send and receive data through the communications interface 2230. For example, the communications interface 2230 is configured to send a first system information block and a second system information block.

In this embodiment of this application, a specific connection medium between the communications interface 2230, the processor 2210, and the memory 2220 is not limited. In this embodiment of this application, in FIG. 22, the memory 2220, the processor 2210, and the communications interface 2230 are connected by using a bus. The bus is indicated by using a thick line in FIG. 22. A connection manner between other components is merely an example for description, and is not limited thereto. The bus may be classified into an address bus, a data bus, a control bus, and the like. For ease of representation, only one thick line is used to represent the bus in FIG. 22, but this does not mean that there is only one bus or only one type of bus.

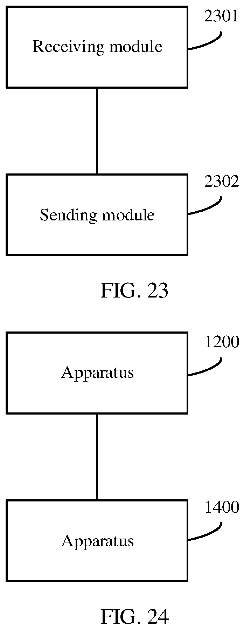

FIG. 23 shows another embodiment of an apparatus provided in this application. The apparatus may be a network device, or may be an apparatus (such as a chip or a chip system) in the network device, and can implement the method performed by the network device in any embodiment of FIG. 11.

The apparatus includes a receiving module 2301 and a sending module 2302. The sending module 2302 is configured to send a first system information block and a second system information block, where the first system information block indicates a location of a resource to be used for initial access on a first carrier, the second system information block is used to indicate a location of a resource to be used for initial access on a second carrier, and a frequency of the first carrier is higher than a frequency of the second carrier. Then the receiving module 2301 is configured to: when a terminal device meets at least one of the following conditions, receive, on the second carrier, data to be sent by the terminal device in an initial access process, where the conditions are:
a service type of the data to be sent by the terminal device in the initial access process is a preset type, a data volume of the data to be sent by the terminal device in the initial access process is less than a first threshold, and a signal receiving quality of the terminal device on the first carrier is less than a second threshold.

In a possible design, the first carrier is a non-SUL carrier, and the second carrier is an SUL carrier.

In a possible design, the preset type includes a type of URLLC service data.

It should be understood that the apparatus may be configured to implement the steps performed by the network device in the initial access method shown in FIG. 11 in the embodiments of this application. For related features, refer to the foregoing descriptions. Details are not described herein again.

As shown in FIG. 24, a communications system according to an embodiment of this application includes an apparatus 1200 and an apparatus 1400.

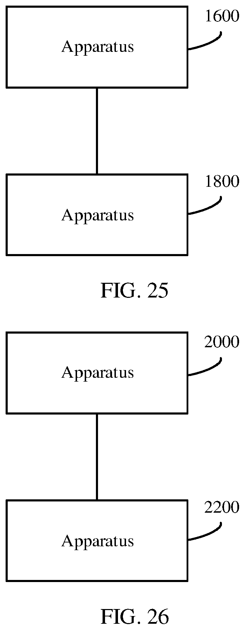

As shown in FIG. 25, a communications system according to an embodiment of this application includes an apparatus 1600 and an apparatus 1800.

As shown in FIG. 26, a communications system according to an embodiment of this application includes an apparatus 2000 and an apparatus 2200.

It should be understood that a manner of module division in the apparatuses shown in FIG. 13, FIG. 15, FIG. 17, FIG. 19, FIG. 21, and FIG. 23 is an example, and is merely logical function division. During actual implementation, there may be another division manner.

All or some of the foregoing embodiments may be implemented by software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are completely or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (Solid State Disk, SSD)), or the like.

Although this application is described with reference to the embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

A person skilled in the art should understand that the embodiments of this application may be provided as a method, an apparatus (device), a computer-readable storage medium, or a computer program product. Therefore, this application may use a form of hardware only embodiments, software only embodiments, or embodiments with a combination of software and hardware. They are collectively referred to as "modules" or "systems".

This application is described with reference to the flowcharts and/or block diagrams of the method, the apparatus (device), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device, so that the instructions executed by the computer or the processor of another programmable data processing device generate an apparatus for implementing a specific function in one or more processes in the flowcharts and/or in one or more blocks in the block diagrams.

These computer program instructions may also be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application is described with reference to specific features and the embodiments thereof, clearly, various modifications and combinations may be made to them without departing from the spirit and scope of this application. Correspondingly, the specification and the accompanying drawings are merely example descriptions of this application defined by the accompanying claims, and is considered as any of or all modifications, variations, combinations or equivalents that cover the scope of this application.

Clearly, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An uplink data sending method, wherein the method comprises:
receiving, by a terminal device, control information sent by a network device, wherein the control information is used to indicate the terminal device to send first data on a first resource; and
when the first resource and a second resource to be used by the terminal device to send second data overlap in a first time domain range in time domain, stopping sending, by the terminal device on the first resource, the first data in the first time domain range, wherein
a frequency domain range corresponding to the first resource belongs to a first carrier, and a frequency domain range corresponding to the second resource belongs to a second carrier.

2. The method according to claim 1, wherein a frequency of the first carrier is higher than a frequency of the second carrier.

3. The method according to claim 1 or 2, wherein the method further comprises:
sending, by the terminal device on the second resource, the second data in the first time domain range.

4. The method according to any one of claims 1 to 3, wherein the method further comprises:
stopping sending, by the terminal device on the first resource, the first data in a second time domain range before the first time domain range and/or a third time domain range after the first time domain range, wherein an end moment of the second time domain range overlaps a start moment of the first time domain range, and an end moment of the first time domain range overlaps a start moment of the third time domain range.

5. The method according to claim 4, wherein a length of the second time domain range and/or a length of the third time domain range are/is predefined; or
the method further comprises:
receiving, by the terminal device, indication information sent by the network device, wherein the indication information is used to indicate a length of the second time domain range and/or a length of the third time domain range.

6. The method according to any one of claims 1 to 5, wherein the first carrier is a non-supplementary uplink frequency non-SUL carrier, and the second carrier is a supplementary uplink frequency SUL carrier.

7. The method according to any one of claims 1 to 6, wherein the second data is ultra-reliable and low-latency communications URLLC service data.

8. An uplink data receiving method, wherein the method comprises:
sending, by a network device, control information to a terminal device, wherein the control information is used to indicate the terminal device to send first data on a first resource; and
if receiving, on a second resource in a first time domain range, second data sent by the terminal device, determining, by the network device, that the terminal device stops sending, on the first resource, the first data in the first time domain range, wherein the second resource and the first resource overlap in the first time domain range in time domain, a frequency domain range corresponding to the first resource belongs to a first carrier, and a frequency domain range corresponding to the second resource belongs to a second carrier.

9. The method according to claim 8, wherein a frequency of the first carrier is higher than a frequency of the second carrier.

10. The method according to claim 8 or 9, wherein the method further comprises:
determining, by the network device, that the terminal device stops sending, on the first resource, the first data in a second time domain range before the first time domain range and/or a third time domain range after the first time domain range, wherein an end moment of the second time domain range overlaps a start moment of the first time domain range, and an end moment of the first time domain range overlaps a start moment of the third time domain range.

11. The method according to claim 10, wherein a length of the second time domain range and/or a length of the third time domain range are/is predefined; or
the method further comprises:
sending, by the network device, indication information to the terminal device, wherein the indication information is used to indicate a length of the second time domain range and/or a length of the third time domain range.

12. The method according to any one of claims 8 to 11, wherein the first carrier is a non-supplementary uplink frequency non-SUL carrier, and the second carrier is an SUL carrier.

13. The method according to any one of claims 8 to 11, wherein the second data is ultra-reliable and low-latency communications URLLC service data.

14. An apparatus, comprising a processor, wherein the processor is coupled to a memory and reads an instruction in the memory, to perform the method according to any one of claims 1 to 7.

15. The apparatus according to claim 14, wherein the apparatus is a terminal device.

16. An apparatus, comprising a processor, wherein the processor is coupled to a memory and reads an instruction in the memory, to perform the method according to any one of claims 8 to 13.

17. The apparatus according to claim 16, wherein the apparatus is a network device.

18. A computer storage medium, wherein the computer storage medium stores a program; and when the program is executed by a processor, the processor is configured to implement the method according to any one of claims 1 to 13.
